(19) Europäisches Patentamt
European Patent Office
Office européen des brevets

(11) **EP 3 199 265 B1**

(12) **EUROPEAN PATENT SPECIFICATION**

(45) Date of publication and mention
of the grant of the patent:
**27.05.2020 Bulletin 2020/22**

(51) Int Cl.:
***B22F 3/00*** *(2006.01)*   ***B33Y 70/00*** *(2020.01)*
***B33Y 10/00*** *(2015.01)*   ***B22F 1/00*** *(2006.01)*

(21) Application number: **17150750.2**

(22) Date of filing: **10.01.2017**

(54) **SOLID FREEFORM FABRICATION POWDER MATERIAL, SOLID FREEFORM FABRICATION MATERIAL SET, METHOD OF MANUFACTURING SOLID FREEFORM FABRICATOIN OBJECT, METHOD OF MANUFACTURING SINTERED COMPACT, AND DEVICE FOR MANUFACTURING SOLID FREEFORM FABRICATION OBJECT**

FESTFREIFORMFERTIGUNGSPULVERMATERIAL, FESTFREIFORMFERTIGUNGSMATERIALSATZ, VERFAHREN ZUR HERSTELLUNG EINES FESTFREIFORMFERTIGUNGSOBJEKTS, VERFAHREN ZUR HERSTELLUNG EINES SINTERKÖRPERS UND VORRICHTUNG ZUR HERSTELLUNG EINES FESTFREIFORMFERTIGUNGSOBJEKTS

MATÉRIAU EN POUDRE DE FABRICATION DE FORME LIBRE SOLIDE, ENSEMBLE DE MATÉRIAU DE FABRICATION DE FORME LIBRE SOLIDE, PROCÉDÉ DE FABRICATION D'UN OBJET DE FABRICATION DE FORME LIBRE SOLIDE, PROCÉDÉ DE FABRICATION D'ÉLÉMENT COMPACT FRITTÉ ET DISPOSITIF DE FABRICATION D'UN OBJET DE FABRICATION DE FORME LIBRE SOLIDE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.01.2016 JP 2016013597**
**30.09.2016 JP 2016193874**

(43) Date of publication of application:
**02.08.2017 Bulletin 2017/31**

(73) Proprietor: **Ricoh Company, Ltd.**
**Tokyo 143-8555 (JP)**

(72) Inventors:
• **YAMASHITA, Yasuyuki**
**Ohta-ku, Tokyo 143-8555 (JP)**
• **SUZUKI, Yasuo**
**Ohta-ku, Tokyo 143-8555 (JP)**
• **IWATSUKI, Hitoshi**
**Ohta-ku, Tokyo 143-8555 (JP)**
• **KUSAHARA, Teruki**
**Ohta-ku, Tokyo 143-8555 (JP)**
• **YAMAGUCHI, Takeo**
**Ohta-ku, Tokyo 143-8555 (JP)**
• **SAITO, Takuya**
**Ohta-ku, Tokyo 143-8555 (JP)**
• **TAMOTO, Nozomu**
**Ohta-ku, Tokyo 143-8555 (JP)**

(74) Representative: **White, Duncan Rohan**
**Marks & Clerk LLP**
**Fletcher House (2nd Floor)**
**Heatley Road**
**The Oxford Science Park**
**Oxford OX4 4GE (GB)**

(56) References cited:
**WO-A1-2008/038532    WO-A1-2015/046629**
**JP-A- 2008 184 562**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Technical Field

The present invention relates to a solid freeform fabrication powder material, a solid freeform fabrication material set, a method of manufacturing a solid freeform fabrication object, a method of manufacturing a sintered compact, and a device for manufacturing a solid freeform fabrication object.

Description of the Related Art

Additive manufacturing methods utilizing 3D printers to manufacture more complex and finer solid freeform fabrication objects on demand have been introduced to supersede the typical method of manufacturing solid objects utilizing shaping dies. In particular, powder additive manufacturing methods are used to manufacture a solid freeform fabrication object made of metal or inorganic compounds. Some powder additive manufacturing methods of manufacturing solid freeform fabrication objects include laminating a solid freeform fabrication object powder material including particles of metal, inorganic compound, etc., and applying a solid freeform fabrication liquid material to every single or multiple layers in predetermined patterns. The liquid material dissolves the powder material to cause powder particles to adhere to each other. The thus-obtained solid freeform fabrication object is subject to degreasing and sintering to obtain a sintered compact.

In this powder additive manufacturing method described above, organic materials such as binder resins are added to the solid freeform fabrication powder material to cause the powder to adhere to each other.

As the method of adding the organic material to the solid freeform fabrication powder material, mixing the organic material with the solid freeform fabrication powder material is known.

Moreover, solid freeform fabrication objects are weak in the Z axis direction, which is the lamination direction of the solid freeform fabrication object. This is inferred to stem from the fact that when forming a powder material layer, voids tend to be present between layers in the Z axis direction while powder materials are close to each other on the X-Y plane so that sufficient strength is easily obtained. This is a general issue for additive manufacturing.

Also, this is particularly an issue to manufacture a solid freeform sintered object made of metal requiring high strength. Such a metal sintered compact is used for articles requiring a high strength such as mechanical parts, jigs, prototypes for measuring mechanical strength, etc. At this time, if the strength of a metal sintered compact is high on X-Y plane but low in the Z-axis direction, it collapses immediately depending on application of a force so that it is not suitable as a metal part or a prototype. The adhesion force between layers can be improved by increasing the amount of an organic material. However, it is not sufficient to decrease voids between layers. For this reason, the effect of increasing the strength in the Z axis direction is limited. In addition, if an organic material is increased, the organic material spreads out to areas where the organic material should not be present, thereby prompting adhesion of extra powder, so that dimension accuracy of both a solid freeform fabrication object and a sintered compact may significantly deteriorate. In addition, if a large amount of an organic material is added, the volume of a solid freeform fabrication object significantly contracts during sintering. This leads to deterioration of the dimension accuracy of a sintered compact. Accordingly, the amount of the organic material has to be optimized in order to strike a balance between strength and dimension accuracy of a solid freeform fabrication object including metal and a sintered compact made of metal.

WO-A-2008038532 discloses a method for producing a polyamide particle having a lower melting point than that of a spherical polyamide particle used as a starting material, comprising the step of hydrolyzing the spherical polyamide particle in an aqueous medium while keeping its shape.

WO-A-2015046629 discloses a three-dimensional object formation method by at least repeating: forming a powder material layer using a powder material for three-dimensional object formation containing a base material coated with an organic material; and hardening a predetermined region of the powder material layer by delivering a hardening liquid to the powder material layer formed in the formation of a powder material layer, where the hardening liquid contains a cross-linking agent cross-linkable with the organic material.

SUMMARY

The invention provides a solid freeform fabrication powder material, a solid freeform fabrication material set including the powder material, a method of manufacturing a solid freeform fabrication object using the powder material, a method of manufacturing a sintered compact from the solid freeform fabrication object, and a manufacturing device including the material set.

## BRIEF DESCRIPTION OF THE SEVERAL VIEWS OF THE DRAWINGS

Various other objects, features and attendant advantages of the present invention will be more fully appreciated as the same becomes better understood from the detailed description when considered in connection with the accompanying drawings in which like reference characters designate like corresponding parts throughout and wherein:

FIG. 1 is a schematic diagram illustrating area envelope degree of a particle for description;
FIGs. 2A to 2F are schematic diagrams illustrating an example of the method of manufacturing a solid freeform fabrication object according to an embodiment of the present invention;
FIGs. 3A to 3F are schematic diagrams illustrating another example of the method of manufacturing a solid freeform fabrication object according to an embodiment of the present invention;
FIG. 4 is a schematic diagram illustrating an example of the fabrication tank and supplying tank illustrated in FIG. 2; and
FIGs. 5A and 5B are schematic diagrams illustrating samples horizontally or vertically layered samples.

The accompanying drawings are intended to depict example embodiments of the present invention and should not be interpreted to limit the scope thereof. The accompanying drawings are not to be considered as drawn to scale unless explicitly noted.

## DESCRIPTION OF THE EMBODIMENTS

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

As used herein, the singular forms "a", "an", and "the" are intended to include the plural forms as well, unless the context clearly indicates otherwise.

Moreover, image forming, recording, printing, modeling, etc. in the present disclosure represent the same meaning.

As the method of adding the organic material to the solid freeform fabrication powder material, mixing the organic material with the solid freeform fabrication powder material is known. As an example, Unexamined Japanese Patent Application No. 2011-230422 discloses a solid freeform fabrication powder including a water-soluble polymer. A liquid fabrication including water as the solvent is dripped to the powder to dissolve it to form a layer of the solid freeform fabrication object. The water-soluble polymer includes a partial saponification type polyvinyl alcohol. In addition, the solid freeform fabrication powder includes an inorganic matter or organic matter having no adhesion power with an average particle diameter of from 9 to 40 $\mu$m.

In addition, Unexamined Japanese Patent Application No. 2012-125996 discloses a powder material for use in solid freeform fabrication to fabricate a solid object, to which a liquid fabrication is discharged to a predetermined area of the powder material accumulating on an accumulation surface.

At this time, the powder material includes particles as a filler, which forms a solid object, and an adhesion bond to be dissolved in a liquid fabrication to bond the particles to each other. In addition, the specific weight of the filler is greater than the specific weight of the liquid fabrication discharged to the powder material.

However, the technologies mentioned above involve an issue that extra powder (solid freeform fabrication powder material to which no solid freeform fabrication liquid material is applied) which is not used for solid freefrom fabrication agglomerates in a solid freeform fabrication tank. This issue causes removal of the extra powder and deformation of a solid freeform fabrication object while removing the extra powder. In addition, if the extra powder is not completely removed, dimension accuracy of the solid freeform fabrication object significantly deteriorates. This leads to degradation of the dimension accuracy of a sintered compact. Moreover, if a massive amount of the agglomerated extra powder is present, the strength and the dimension accuracy of a solid freeform object deteriorate when the extra powder is re-used. For this reason, re-use rate of the extra powder is low.

Moreover, the thing is that solid freeform fabrication objects are weak in the Z axis direction, which is the lamination direction of the solid freeform fabrication object. This is inferred to stem from the fact that when forming a powder material layer, voids tend to be present between layers in the Z axis direction while powder materials are closed to each other on the X-Y plane so that sufficient strength is easily obtained. This is a general issue for additive manufacturing.

Also, this is particularly an issue to manufacture a solid freeform sintered object made of metal requiring high strength. Such a metal sintered compact is used for articles requiring a high strength such as mechanical parts, jigs, prototypes for measuring mechanical strength, etc. At this time, if the strength of a metal sintered compact is high on X-Y plane but low in the Z-axis direction, it collapses immediately depending on application of a force so that it is not suitable as a metal part or a prototype. The adhesion force between layers can be improved by increasing the amount of an organic material. However, it is not sufficient to decrease voids between layers. For this reason, the effect of increasing the strength in the Z axis direction is limited. In addition, if an organic material is increased, the organic material spreads out to areas where the organic material should not be present, thereby prompting adhesion of extra powder, so that dimension accuracy of both a solid freeform fabrication object and a sintered compact may significantly deteriorate. In addition, if a large amount of an organic material is added, the volume of a solid freeform fabrication object significantly contracts during sintering. This leads to deterioration of the dimension accuracy of a sintered compact. Accordingly, the amount of the organic material has to be optimized in order to strike a balance between strength and dimension accuracy of a solid freeform fabrication object including metal and a sintered compact made of metal

However, sintered compact has a high aeolotropy about strength, that is, the strength of a solid freeform fabrication object in the lamination direction (Z axis direction) is low. Therefore, currently the strength of a sintered compact is not clear.

Unexamined Japanese Patent Application No. 2011-230422 and Unexamined Japanese Patent Application No. 2012-125996 mentioned above disclose that fillers are added to decrease warp of a solid freeform fabrication object.

However, in Unexamined Japanese Patent Application No. 2011-230422 and Unexamined Japanese Patent Application No. 2012-125996 mentioned above, calcium carbonate and various resin materials are used as fillers without mentioning a metal sintered compact requiring high strength.

The present invention is to provide a solid freeform fabrication powder material extra powder of which has a good removability and low agglomeration property to ameliorate strength of a solid freeform fabrication object and suppress deterioration of the dimension accuracy of the solid freeform fabrication object.

In addition, the present invention is also to provide a metal sintered compact having a high strength in the lamination direction, i.e., z-axis direction, of a solid freeform fabrication object and a low aeolotropy in the X, Y, and Z-axis directions.

The present invention is to provide a solid freeform fabrication powder material capable of ameliorating strength of a solid freeform fabrication object and suppressing deterioration of the dimension accuracy of the solid freeform fabrication object while extra powder of the powder material is easily removed and has a low agglomeration property.

In addition, the present invention is also to provide a metal sintered compact having a high strength in the lamination direction, i.e., z-axis direction, of a solid freeform fabrication object and a low aeolotropy in the X, Y, and Z-axis directions.

Embodiments of the present disclosure are described below but are not limiting the present invention. The present disclosure are not limited to those.

Solid Freeform Fabrication Powder Material

The solid freeform fabrication powder material (hereinafter referred to as powder material) of embodiments of the present invention includes a metal particle, a water-soluble organic material particle, and other optional components (hereinafter referred to as other component).

Metal Particle

The metal particle is not particularly limited and can be suitably selected to suit to a particular application as long as the metal can have a powder or particle form.

The material constituting the metal particle is not particularly limited and can be suitably selected to suit to a particular application. Specific examples include, but are not limited to, Mg, Al, Ti, V, Cr, Mn, Fe, Co, Ni, Cu, Zn, Y, Zr, Nb, Mo, Pd, Au, Ag, Pt, In, Sn, Ta, W, Sb, and alloys thereof.

As the material constituting the metal particle, for example, stainless copper (SUS), iron, copper, titanium, silver, aluminum, zirconium, or alloys thereof are particularly suitable.

Specific examples of the stainless (SUS) steel include, but are not limited to, SUS304, SUS316, SUS317, SUS329, SUS410, SUS430, SUS440, and SUS630.

The density of the metal particle is preferably 3 $g/cm^3$ or greater. When the density of the metal particle is 3 $g/cm^3$ or greater, if powder material is paved flat (also referred to as recoated), the metal particle is closely packed with ease. Therefore, the void ratio of a solid freeform fabrication object and a sintered compact can be decreased in some cases.

These materials can be used alone or in combination.

It is possible to use powder or particles formed of these materials available on the market as the metal particle in embodiments of the present disclosure.

The metal particle may be subject to known surface reforming treatment in order to improve affinity with the organic material particle.

The volume average particle diameter of the metal particle is preferably 1 - 250 μm, more preferably 2 - 100 μm, furthermore preferably 3 - 50 μm, and particularly preferably 5 - 25 μm. When the volume average particle diameter of the metal particle is 1 μm or greater, fluidity (flowability) of the powder material ameliorates, thereby easily forming a powder material layer, which is described later, and improving smoothness of the surface of the powder material layer. As a consequence, the manufacturing efficiency of solid freeform fabrication objects and handling property of the powder material are improved. Also, dimension accuracy of the solid freeform fabrication object tends to ameliorate. On the other hand, when the volume average particle diameter of the metal particle is 250 μm or less, the number of contact points of powder material increases and at the same time, space in a solid freeform fabrication object becomes small. Therefore, strength and dimension accuracy of the solid freeform fabrication object and the sintered compact.

To control the volume average particle diameter of metal particles, for example, the metal particles are classified using a sieve to collect a desired particle size distribution area. Alternatively, the metal particles are mechanically pulverized to obtain fine particles. Due to these methods, metal particles available on the market can be controlled to obtain a desired volume average particle diameter.

The volume average particle diameter ratio of the metal particle to the organic material particle described later is 0.5 - 3.5. When the volume average particle diameter of the metal particle is at least 0.5 times the volume average particle diameter of the organic material particle, the amount of the organic material can be prevented to be excessive. Therefore, it is possible to prevent the organic material from oozing into an area outside desired portions and suppress drying of a solid freeform fabrication object. Also, volume contraction during sintering can be reduced. As a result, solid freeform fabrication objects or sintered compacts with a high dimension accuracy can be obtained. When the volume average particle diameter of the metal particle is at most 3.5 times the volume average particle diameter of the organic material particle, it is possible to suppress variation of strength of a solid freeform fabrication object due to bias of organic material particles and sufficiently demonstrate adhesion force between powder material layers. As a result, aeolotropy of the strength of solid freeform fabrication objects or sintered compact can be reduced.

The particle size distribution of the metal particle is not particularly limited and can be suitably selected to a particular application. It is preferable to have a sharp particle size distribution.

The volume average particle diameter and the particle size distribution of the metal particle can be measured by using a known particle size distribution measuring device.

A specific example is a particle size distribution measuring device (Microtrac MT3000II series, manufactured by MicrotracBEL Corp.).

It is possible to use various shaped particles as the metal particle. For example, spherical metal particles are preferable. That is, metal particles having a high aspect ratio (minor axis/major axis) or circularity are preferable. In the case of such metal particles, the filing factor of the metal particle increases when a powder material layer including metal particles is formed (recoated). As a result, voids in solid freeform fabrication objects and sintered compacts and also voids between layers can be reduced, so that strength of the solid freeform fabrication object and the sintered compact can be enhanced. In particular, if voids between layers are reduced, strength in the Z-axis direction can be improved so that aeolotropy of the solid freeform fabrication object and the sintered compact can be reduced.

In this embodiment, the aspect ratio (average value) of the metal particle is preferably 0.85 or greater and more preferably 0.90 or greater. When the aspect ratio (average value) of the metal particle is 0.85 or greater, the void ratio of a solid freeform fabrication object and sintered compact is reduced. As a consequence, strength of the solid freeform fabrication object and sintered compact are enhanced and variation of strength depending on sites in the solid freeform fabrication object is reduced.

In this embodiment, the aspect ratio (average value) of the particle can be obtained according to the following method.

The aspect ratio (average) is obtained by obtaining each aspect ratio (minor axis/major axis) of each particle for use in analysis and thereafter weighing with how much the particle having a predetermined aspect ratio exists in the analyzed entire particles. The ratio is calculated by the following Relation 1:

$$\text{Aspect ratio (average value)} = (X1 \times Y1 + X2 \times Y2 + \cdots + Xn \times Yn)/100$$

$$\text{Relation 1}$$

In the Relation 1, Xi represents the aspect ratio (minor axis/major axis) of a particle and Yi represents the existing rate (percent) of the particle having an aspect ratio of Xi, where i represents an integer of 1 to n and Y1 + Y2 + ⋯ + Yn = 100.

The aspect ratio can be measured by a known particle form measuring device.

For example, Morphologi G3-SE (manufactured by Spectris Co., Ltd.) is usable.

There is no specific limitation to the conditions of measuring the aspect ratio of particles.

For example, aspect ratio is measured under the conditions of: dispersive pressure: 4 bar, compressed air application time: 10ms, leave to rest time: 60 seconds, number of measuring particles: 50,000, and filtering by degree of area envelope of the particle. Only particles considered as primary particles are subject to the aspect ratio analysis. The number of expected primary particles is preferably 15,000 or more and more preferably 20,000 or more.

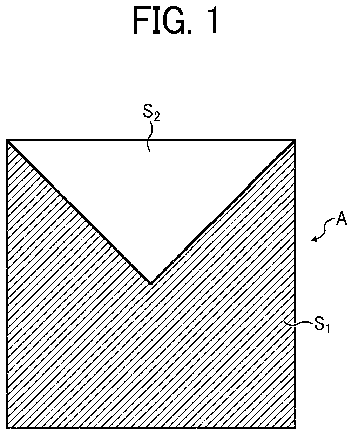

As illustrated in FIG. 1, the degree of area envelope of Particle A means a value obtained by dividing the area $S_1$ of Particle A with the area $(S_1 + S_2)$ of convex envelope of Particle A and calculated by the following Relation 2. S2 represents a convex area to calculate the area envelop of Particle A. The degree of the area envelope is represented by the value of from 0 to 1, indicating how jagged Particle A is.

$$\text{Degree of area envelope of Particle A} = S_1/(S_1 + S_2) \qquad \text{Relation 2}$$

Filtering according to the degree of area envelope of particle is conducted, for example, based on the relation: Degree of area envelope of particle > 0.99 > 100 pixels.

In some embodiments, the circularity of metal particles is preferably 0.90 or greater and more preferably 0.95 or greater. When the circularity of metal particles is 0.90 or greater, the metal particles are closely packed and the void ratio of the metal particles is reduced. As a consequence, strength of the solid freeform fabrication object and sintered compact is enhanced and variation of strength depending on sites in the solid freeform fabrication object is reduced.

The circularity of metal particles can be measured by using a known circularity measuring device.

For example, flow-type particle image analyzer (FPIA-3000, manufactured by Malvern Instruments Ltd.) is usable.

The metal particle can be manufactured according to a known method.

As the method of manufacturing metal particles, for example, a pulverization method of pulverizing a solid by compression, impact, friction, etc., an atomizing method of spraying a molten metal to obtain quenched powder, a precipitation method of precipitating a component dissolved in a liquid, and a gas-phase reaction method of gasification for crystallization.

In this embodiment, the method of manufacturing metal particles are not particularly limited. A preferred example is the atomizing method to obtain spherical particles with less variation of the particle diameter.

Examples of the atomizing method are a water atomizing method, a gas atomizing method, a centrifugal atomizing method, and plasma atomizing method. Any of these can be suitably used.

Organic Material Particle

The material constituting organic material particle is not particularly limited and can be suitably selected to suit to a particular application as long as it is water-soluble and has a particle form.

"Water-soluble" in the present disclosure means "substantially easily dissolved in water". "Substantially easily dissolved in water" is, for example, when 1 g of organic material particles is mixed and stirred with 100 g of a solvent contained in a liquid fabrication at 30 degrees C, 90 percent by mass or more of the organic material particles is dissolved therein.

As the organic material, for example, water soluble resins and water soluble prepolymers are suitable. Of these, water-soluble resin is preferable.

Examples of the water-soluble resin are polyvinyl alcohol (PVA) resins, polyvinyl pyrrolidone, polyamides, polyacrylic amides, polyethylene imine, polyethyleneoxides, polyacrylate resins, cellulose resins, and gelatin. Of these, polyvinyl alcohol is preferably used to enhance strength and dimension accuracy of a solid freeform fabrication object.

Homopolymers (monopolymers), heteropolymers (copolymers), and modified resins are allowed if these are water-soluble. Moreover, known functional groups can be introduced thereinto and the form of a salt is also allowed.

For example, in the case of a polyvinyl alcohol resin, polyvinyl alcohol is suitable and modified polyvinyl alcohol modified by an acetoacetyl group, an acetyl group, or silicone (i.e., acetoacetyl group-modified polyvinyl alcohol, acetyl group-modified polyvinyl alcohol, and silicone-modified polyvinyl alcohol) are also suitable. In addition, copolymers of butanediol and vinyl alcohol can be options.

In the case of a polyacrylic acid resin, polyacrylic acid and salts such as sodium polyacrylate are suitable. Moreover, in the case of the polyacrylic resin, a copolymer of acrylic acid and maleic anhydride are suitable.

In the case of the cellulose resin, for example, carboxymethyl cellulose sodium (CMC) is suitable.

As the water-soluble prepolymer, for example, an adhesive water soluble isocyanate prepolymer contained in a water stopping agent is suitable.

In some embodiments, the water-soluble resin contained in the organic material particle can include a cross-linkable functional group, which is preferable in terms of enhancing the strength of a solid freeform fabrication object.

There is no specific limit to such cross-linkable functional groups. These can be suitably selected to suit to a particular application. Specific examples thereof include, but are not limited to, hydroxyl group, carboxylic group, carbonyl group, amide group, phosphoric acid group, thiol group, acetoacetyl group, and ether bond.

Moreover, water-soluble resins contained in the organic material particle are preferably modified polyvinyl alcohol including a cross-linkable functional group. For example, acetoacetyl group modified polyvinyl alcohol, carbonyl group modified polyvinyl alcohol, and carboxyl group modified polyvinyl alcohol are particularly preferable.

If the water-soluble resin contained in the organic material particle includes a cross-linkable functional group, the organic material particles are easily cross-linked so that the strength of a solid freeform fabrication object is enhanced, which is preferable. If a cross-linking agent is added to the liquid material, which is described later, when the liquid material contacts the powder material, the organic material contained in the powder material is dissolved in water contained in the liquid material and at the same time, the cross-linking agent contained in the liquid material conducts cross-linking reaction with the cross-linkable functional group of the organic material particle contained in the powder material. Therefore, if the solvent contained in the liquid material evaporates, the metal particles contained in the powder material are more firmly attached. As a result, the strength of a solid freeform fabrication object is furthermore enhanced.

For example, if modified polyvinyl alcohol contained in the organic material particle includes an acetoacetyl group, a carbonyl group, etc. and the cross-linking agent contained in the liquid material is an organic metal salt, the acetoacetyl group or the carbonyl group of the modified polyvinyl alcohol easily form a complex three-dimensional network structure, that is, cross-linking structure, via the metal ion of the organic metal salt. That is, since the organic material particle and the cross-linking agent are greatly cross-linking reactive, the strength of a solid freeform fabrication object is significantly enhanced.

As the modified polyvinyl alcohol, it is possible to use a single kind of the modified polyvinyl alcohol or two or more kinds having different values for properties such as viscosity and saponification in combination.

The average degree of polymerization of the modified polyvinyl alcohol is preferably 100 - 1,100 and more preferably 200 - 500.

The saponification degree of the modified polyvinyl alcohol is not particularly limited and can be suitably selected to suit to a particular application. For example, 80 percent or more is preferable. Therefore, as the modified polyvinyl alcohol, known partially or completely saponified modified polyvinyl alcohols are suitably used.

Water-soluble resin contained in the organic material particle can be used alone or in combination. Also, the water-soluble resin contained in the organic material particle can be appropriately synthesized or available on the market.

Specific examples of the products available on the market of the water-soluble resin included in the organic material particle include, but are not limited to, polyvinyl alcohol (PVA-205C, PVA-220C, manufactured by KURARAY CO., LTD.), polyacrylic acids (JURYMER® AC-10, manufactured by TOAGOSEI CO., LTD.), sodium polyacrylate (JURYMER® AC-103P, manufactured by TOAGOSEI CO., LTD.), acetoacetyl group-modified polyvinyl alcohol (Gohsenx Z-300, Gohsenx Z-100, Gohsenx Z-200, Gohsenx Z-205, Gohsenx Z-210, and Gohsenx Z-220, manufactured by The Nippon Synthetic Chemical Industry Co., Ltd.), carboxyl group-modified polyvinyl alcohol (Gohsenx T-330, Gohsenx T-350, and Gohsenx T-330T, manufactured by The Nippon Synthetic Chemical Industry Co., Ltd.), and copolymers of butanediol and vinyl alcohol (Nichigo G-Polymer OKS-8041, manufactured by The Nippon Synthetic Chemical Industry Co., Ltd.), carbonyl group-modified polyvinyl alcohol (D Polymer DF-05, manufactured by JAPAN VAM & POVAL CO., LTD.), POVEL JMR Series, manufactured by JAPAN VAM & POVAL CO., LTD.), carboxymethyl cellulose sodium (CELLOGEN 5A, manufactured by DKS Co. Ltd.), starch (Histard PSS-5, manufactured by Sanwa Starch Co., Ltd.), and gelatin (beMatrix®, manufactured by Nitta Gelatin Inc.).

The volume average particle diameter of the organic material particle is 3 - 15 $\mu$m and more preferably 5 - 12 $\mu$m. When the volume average particle diameter of the organic material particle is less than 3 $\mu$m, the organic material particles agglomerate, which causes agglomeration of metal particles. In addition, the organic material particle has locality so that the metal particle and the organic material particle are not uniformly distributed. For this reason, variation of the strength of a solid freeform fabrication object occurs, which leads to occurrence of partial chipping or breakage. When the volume average particle diameter of the organic material particle is greater than 15 $\mu$m, since the distance between metal particles tends to be large, voids tend to appear when a liquid material is attached. Therefore, the metal particles are not closely attached. As a consequence, the strength of a solid freeform fabrication object lowers and at the same time, aeolotropy of strength of a sintered compact increases. Also, the amount of the organic material is excessive, spreading to the outside desired areas. In addition, extra powder is attached to a solid freeform fabrication object so that the dimension accuracy of the solid freeform fabrication object becomes low.

The volume average particle diameter of the organic material particle can be measured by using a known particle size distribution measuring device.

A specific example is a particle size distribution measuring device (Microtrac MT3000II series, manufactured by MicrotracBEL Corp.)

It is possible to use various shaped particles as the organic material particle. For example, spherical organic material particles are preferable. That is, organic material particles having a higher aspect ratio (minor axis/major axis) or circularity are preferable. Due to this, the flowability of metal particles is improved and the filing factor of the powder material increases when forming (recoating) the powder material layer. As a result, voids in solid freeform fabrication objects and sintered compacts and also voids between layers can be reduced so that the strength of the solid freeform fabrication object and the sintered compact can be enhanced. Moreover, variation of strength of the solid freeform fabrication object and aeolotropy of strength of sintered compact are reduced in some cases.

The aspect ratio of the organic material particle can be measured by using a known particle form measuring device.

For example, Morphologi G3-SE (manufactured by Spectris Co., Ltd.) is usable as the particle form measuring device.

The circularity of the organic material particle can be measured by using a known particle form measuring device.

For example, flow-type particle image analyzer (FPIA-3000, manufactured by Malvern Instruments Ltd.) is usable as the particle form measuring device.

The content rate of the organic material particle to the powder material is 2 - 18 percent by volume and preferably 4 - 12 percent by volume. When the content ratio of the organic material particle to the powder material is less than 2 percent by volume, the strength of a solid freeform fabrication object becomes low, which increases the risk of deformation before sintering. When the content ratio of the organic material particle to the powder material is greater than 18 percent by volume, the organic material diffuses to areas outside desired sites so that extra powder adheres to the areas outside desired sites or agglomerates, thereby increasing the surface roughness. As a result, the dimension accuracy of a solid freeform fabrication object becomes low.

As the organic material particle, known powder materials available on the market can be used. In addition, organic material particles can be manufactured by preparing particles of resins.

As the method of manufacturing the organic material particle, known methods such as spray drying methods and frost shuttering methods are usable.

The spray drying method includes turning liquid into fine spray and jetting it into heated wind to instantly obtain powdery dried matter.

The frost shuttering method includes pulverizing a material by instant freezing under the conditions of super low temperatures with no oxygen utilizing properties of the material becoming hard and brittle at extremely low temperatures.

In some embodiments, as the method of manufacturing the organic material particle, any known manufacturing method can be suitable. The spray drying method is preferable in order to easily obtain spherical particles.

Other Components

The other components are not particularly limited and can be selected to a suitable application. Examples are fluidizers, fillers, leveling agents, and sintering helping agents.

Inclusion of a fluidity improver is preferable to easily and efficiently form a layer of the powder material. It is preferable to include a filler because voids etc. do not easily appear in an obtained solid freeform fabrication object. Addition of a leveling agent to the powder material is preferable because the wettability of the powder material is improved, so that handling becomes easy. Inclusion of a sintering helping agent is also preferable because a solid freeform fabrication object can be sintered at lower temperatures.

The powder material can be applied to simple and efficient manufacturing of various objects and structures and also particularly suitably applied to the material set, the method of manufacturing a solid freeform fabrication object, and the device for manufacturing a solid freeform fabrication object, which are described later.

In this embodiment, a solid freeform fabrication object having a complex three-dimensional form can be easily and efficiently manufactured with a good dimension accuracy by simply applying a liquid material to the powder material. The thus-obtained solid freeform fabrication object has a sufficient hardness so that the object is free of losing shape even when it is held by hand or placed in or out of a mold or extra powder material is removed by air blow treatment. That is, excellent handling property is secured. The solid freeform fabrication object can be used as a fabrication model as is. Furthermore, it is possible to degrease the model and thereafter sinter it to manufacture a sintered compact. Moreover, since the sintering causes no undesired voids, a sintered compact having an aesthetic appearance is easily obtained.

Liquid Material for Solid Form Fabrication

The solid freeform fabrication liquid material (hereinafter referred to as liquid material) includes water and other optional components.

Water

This water is not particularly limited as long as it can dissolve the organic material particle. For example, deionized water and distilled water are usable.

The content ratio of water is not particularly limited and can be suitably selected to suit to a particular application. The content ratio of water to the total mass of the liquid material is preferably 20 - 95 percent by mass, more preferably 40 - 90 percent by mass, and more preferably 50 - 85 percent by mass. In this range, the organic material particle included in the powder material can maintain a high solubility. As a result, it is possible to prevent the organic material particle from being undissolved, thereby enhancing strength of a solid freeform fabrication object. In addition, when the liquid material to be applied in an inkjet method stands by, liquid clogging or non-discharging of an inkjet nozzle due to drying of the inkjet nozzle does not occur.

Aqueous Solvent

The liquid material may furthermore optionally include aqueous solvents such as alcohol, polyol, ether, and ketone.

Specific examples of the aqueous solvent include, but are not limited to, ethanol, propanol, butanol, 1,2,6-hexane triol, 1,2-butane diol, 1,2-hexanediol, 1,2-pentanediol, 1,3-diemthyl-2-imidazolidinone, 1,3-butane diol, 1,3-propane diol, 1,4-butane diol, 1,5-pentanediol, 1,6-hexanediol, 2,2-dimethyl-1,3-propane diol, 2,3-butane diol, 2,4-pentanediol, 2,5-hexanediol, 2-ethyl-1,3-hexanediol, 2-pyrolidone, 2-methyl-1,3-propane diol, 2-methyl-2,4-pentanediol, 3-methyl-1,3-butane diol, 3-methyl-1,3-hexanediol, N-methyl-2-pyrolidone, N-methyl pyrrolidinone, $\beta$-buthoxy-N,N-dimethyl-propione amide, $\beta$-methoxy-N,N-dimethyl propione amide, $\gamma$-butylolactone, $\epsilon$-caprolactam, ethylene glycol, ethylene glycol-n-butyl ether, ethylene glycol-n-propylether, ethylene glycol phenyl ether, ethylene glycol mono-2-ethylhexyl ether, ethylene glycol monoethyl ether, glycerin, diethylene glycol, diethylene glycol-n-hexylether, diethylene glycolmethylether, diethylene glycol monoethyl ether, dietheylene glycol monobutyl ether, diethylene glycol monomethyl ether, diglycerin, dipropylene glycol, dipropylene glycol, dipropylene glycol-n-propylether, dipropylene glycol monomethylether, dimethylsulfoxide, sulfolane, thiodiglycol, tetraethylene glycol, triethylene glycol, triethylene glycol ethylether, triethylene glycol dimethylether, triethylene glycol monobutylether, triethylene glycol methylether, tripropylene glycol, tripropylene glycol-n-propylether, tripropylene glycol methylether, trimethylol ethane, tirmethylol propane, propylpropylene diglycol, propylene glycol, propylene glycol-n-butylether, propylene glycol-t-butylether, propyleneglycol phenylether, propylene glycol monoethylether, hexylene glycol, polyethylene glycol, and polypropylene glycol. However, the aqueous solvent is not limited to these examples.

Cross-linking Agent

In some embodiments, when the liquid material is applied to the powder material, the organic material particle in the powder material is dissolved in water in the liquid material. Thereafter the water evaporates and the metal particles are glued to each other to form a solid freeform fabrication object. When the organic material particle includes a cross-linkable functional group and a cross-linking agent that conducts cross-linking reaction with the organic material particle is added to the liquid material, the cross-linking agent and the organic material particle form a cross-linking structure so that the strength of an obtained solid freeform fabrication object can be improved. As a result, the degradation of the dimension accuracy of a sintered compact ascribable to deformation of the solid freeform fabrication object caused by removal of extra powder can be suppressed.

The cross-linking agent has no particular limit. Agents capable of conducting cross-linking reaction with the functional group of the organic material particle are suitable. It is preferable to select an agent from organic metal salts to suit to a particular application.

Examples of the organic metal salts are metal complexes, zirconia-based cross-linking agents, titanium-based cross-linking agents, water-soluble organic cross-linking agents, and chelating agents.

Specific examples of the zirconia-based cross-linking agents include, but are not limited to, zirconium oxychloride and ammonium zirconium carbonate.

Specific examples of the titanium-based cross-linking agents include, but are not limited to, titanium acylate and titanium alkoxide.

Specific examples of the chelating agents include, but are not limited to, organic titanium chelate and organic zirconium chelate.

These can be used alone or in combination.

Furthermore, organic metal salts that ionize polyvalent metal ions in water are preferable.

Specific examples of the organic metal salts include, but are not limited to, zirconium oxychloride octahydrate (quadrivalent), titanium lactate ammonium salt (quadrivalent), aluminum subacetate (trivalent), ammonium salt of zirconium oxycarbonate (quadrivalent), titanium triethanol aminate (quadrivalent), glyoxyl acid salts, and zirconium lactate ammonium salts.

In addition, products of organic metal salts are available on the market.

Specific examples of such products available on the market include, but are not limited to, acid zirconium chloride of zirconium oxychloride octahydrate (manufactured by DAIICHI KIGENSO KAGAKU KOGYO Co., LTD.), aluminum hydroxide (manufactured by Wako Pure Chemical Industries, Ltd.), magnesium hydroxide (manufactured by Wako Pure Chemical Industries, Ltd.), titanium lactate ammonium salts (Orgatix TC-300, manufactured by Matsumoto Fine Chemical Co. Ltd.), zirconium lactate ammonium salts (Orgatix ZC 300, manufactured by Matsumoto Fine Chemical Co. Ltd.), basic aluminum lactate (manufactured by Wako Pure Chemical Industries, Ltd.), bisvinyl sulfone compound (VS-B (K-FJ-C), manufactured by FUJIFINE Chemical CORPORATION), ammonium zirconium oxycarbonate (Zircosol AC-20, manufactured by DAIICHI KIGENSO KAGAKU KOGYO CO., LTD.), and titanium triethanol aminate (Orgatix TC-400, manufactured by Matsumoto Fine Chemical Co. Ltd.).

When the degree of valent of the metal in the organic metal salt mentioned above is di- or higher, the cross-linking strength of a solid freeform fabrication object is improved. As a consequence, the thus-obtained solid freeform fabrication object has a desired strength.

In addition, as the ligand of the metal ion, lactic acid ion is preferable in terms of discharging stability of the liquid material.

Other Components

The other component is suitably selected taking into account conditions such as kinds of devices to apply liquid materials, usage frequency, and amount.

For example, the other components are selected taking into account the conditions such as the kind of device to apply the modeling liquid, frequency of usage, and quantity. For example, when the modeling liquid is applied by an inkjet method, it is suitable to make a selection considering the impact of clogging of the nozzle head in an inkjet printer.

The other components are, for example, known materials such as surfactants, humectants, drying inhibitors, viscosity adjusters, permeating agent, defoaming agents, pH controlling agents, preservatives and fungicides, coloring agents, preserving agents, and stabilizing agents. These can be added without no particular limit.

The method of preparing the liquid material is not particularly limited and can be selected to suit to a particular application. For example, a method of admixing and dissolving a cross-linking agent and other optional agents and the other components in water is suitable.

The mass ratio of the cross-linking agent to the organic material powder material when applying the liquid material to the powder material is preferably 0.1 - 50 percent by mass, more preferably 0.5 - 40 percent by mass, and particularly preferably 1 - 35 percent by mass. When the mass ratio is 0.1 percent by mass or greater, the strength of a solid freeform fabrication object is enhanced so that problems such as losing shape during sintering or handling the solid freeform fabrication object. When the mass ratio is 50 percent by mass or less, the dimension accuracy of the solid freeform fabrication object is improved.

Material Set for Solid Freeform Fabrication

The solid freeform fabrication material set (hereinafter referred to as material set) in some embodiment includes the powder material, the liquid material including water, and other optional components.

Furthermore, in the material set, the liquid material may furthermore optionally include a cross-linking agent reactive with the cross-linkable functional group of the organic material particle. Due to this, strength of the solid freeform fabrication object can be improved.

In addition, cross-linking agents may be added when using the material set.

The material set can be applied to manufacturing of various objects and structures and also particularly suitably applied to the method of manufacturing solid freeform fabrication objects of this embodiment and the device for manufacturing solid freeform fabrication objects of this embodiment, which are described later.

When using the material set to manufacture a solid freeform fabrication object, the solid freeform fabrication object having a complex steric form is easily and efficiently manufactured by simply applying the liquid material to the powder material followed by optional drying. The thus-obtained solid freeform fabrication object has a sufficient strength so that the object is free of losing shape even when it is held by hand or placed in or out of a mold or extra powder material is removed by air blow treatment. That is, excellent handling property is secured. The solid freeform fabrication object can be used as is. Also, it is possible to sinter the solid freeform fabrication object to obtain a sintered compact. Moreover, since the sintering causes no undesired voids, a sintered compact having an aesthetic appearance is easily obtained.

Method of Manufacturing Solid Freeform Fabrication Object

The method of manufacturing a solid freeform fabrication object of some embodiments includes forming a powder material layer (hereinafter referred to as powder material layer forming process) using the powder material and applying the liquid material to a desired site of the powder material layer (hereinafter referred to as liquid material applying process). A solid freeform fabrication object can be manufactured by repeating the powder material layer forming process and the liquid material applying process. The method of manufacturing a solid freeform fabrication object of some embodiments may furthermore include optional processes.

By the method of manufacturing a solid freeform fabrication object of this embodiment, extra powder can be easily and cleanly removed so that the manufactured solid freeform fabrication object has a high dimension accuracy. The thus-obtained solid freeform fabrication object has sufficient strength and is free of losing shape even when extra powder is removed or the object is carried by hands. Therefore, the object can firmly maintain its form until sintering so that the sintered compact has a high dimension accuracy.

In addition, extra powder little or never agglomerates and can be reused. Moreover, solid freeform fabrication objects manufactured by using powder material including the extra powder have the same dimension accuracy and fabrication quality as solid freeform fabrication objects manufactured by using fresh powder material (including no extra powder).

Furthermore, the sintered compact obtained by sintering such a solid freeform fabrication object has not only a high strength but also a small aeolotropy on the X-Y plane and in the Z axis direction. Therefore, the sintered compact does not collapse irrespective of the application of a force so that it is suitable for metal parts, jigs, and prototypes.

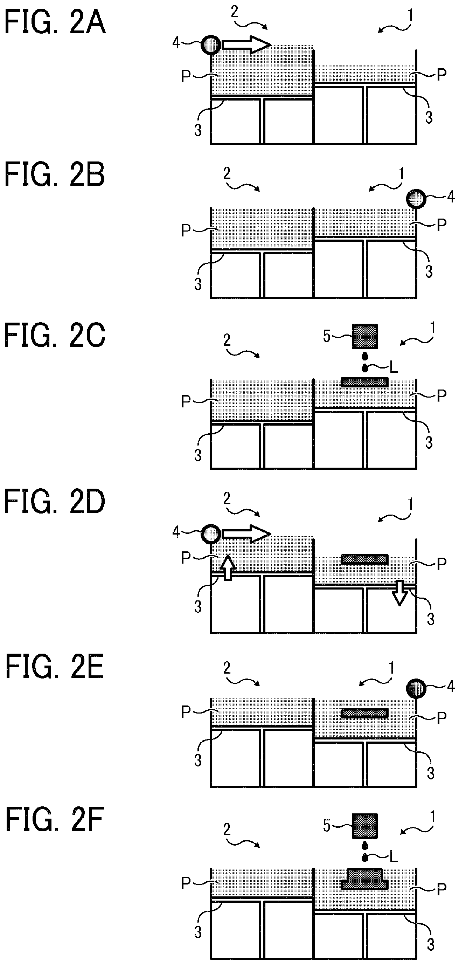

FIG. 2 is a schematic diagram illustrating an example of the method of manufacturing a solid freeform fabrication object in some embodiments of the present disclosure.

The device for manufacturing a solid freeform fabrication object illustrated in FIG. 2 is described first.

The device for manufacturing a solid freeform fabrication object includes a powder storage tank 1 for fabrication to fabricate a solid freeform fabrication object, a powder storage tank 2 for supplying to supply a powder material P to the powder storage tank 1 for fabrication. The powder storage tank 1 for fabrication and the powder storage tank 2 for supplying place the powder material P thereon and stages 3 movable up and down. A powder material layer is formed on the stage 3 of the powder storage tank 1 for fabrication. The device for manufacturing a solid freeform fabrication object includes an inkjet head 5 disposed above the powder storage tank 1 for fabrication to discharge a liquid material L to the powder material layer formed on the stage 3 of the powder storage tank 1 for fabrication. Moreover, the device for manufacturing a solid freeform fabrication object includes a smoothing (recoating) mechanism 4 to supply the powder material P to the stage 3 of the powder storage tank 1 for fabrication from the stage 3 of the powder storage tank 2 for supplying and smooth the surface of the powder material P supplied to the stage 3 of the powder storage tank 1 for fabrication to form the powder material layer.

Each process in the method of manufacturing a solid freeform fabrication object illustrated in FIG. 2 (Fig. 2A to 2F) is described next.

FIGs. 2A and 2B are diagrams illustrating the processes of supplying the powder material P from the stage 3 of the powder storage tank 2 for supplying to the stage 3 of the powder storage tank 1 for fabrication and forming the powder material layer having a smooth surface. At this time, after controlling the gap between the stage 3 of the powder storage tank 1 for fabrication and the stage 3 of the powder storage tank 2 for supplying, the recoater 4 is moved from the powder storage tank 2 for supplying to the powder storage tank 1 for fabrication to form the powder material layer having a desired thickness on the stage 3 of the powder storage tank 1 for fabrication.

FIG. 2C is a diagram illustrating the process of discharging the liquid material L to the powder material layer formed on the stage 3 of the powder storage tank 1 for fabrication using the inkjet head 5. At this time, the position where the liquid material L is discharged is determined by two-dimensional image data (slice data) obtained by slicing a solid freeform fabrication object to be fabricated into multiple plane layers.

FIGs. 2D and 2E are diagrams illustrating the processes of supplying the powder material P from the stage 3 of the powder storage tank 2 for supplying to the stage 3 of the powder storage tank 1 for fabrication and forming the powder material layer having a smooth surface. At this time, after ascending the stage 3 of the powder storage tank 2 for fabrication and descending the stage 3 of the powder storage tank 1 for supplying, the gap with the stage 3 of the powder storage tank 1 for fabrication is controlled. Thereafter, the recoater 4 is moved from the powder storage tank 2 for supplying to the powder storage tank 1 for fabrication to newly form a powder material layer having a desired thickness on the stage 3 of the powder storage tank 1 for fabrication.

FIG. 2F is a diagram illustrating the process of discharging the liquid material L to the powder material layer formed on the stage 3 of the powder storage tank 1 for fabrication using the inkjet head 5. At this time, the position where the liquid material L is discharged is determined by two-dimensional image data (slice data) obtained by slicing a solid freeform fabrication object to be fabricated into multiple plane layers.

This series of processes is repeated and optionally the powder material P to which the liquid material L is attached is dried. The powder material P to which the liquid material L is not attached, that is, extra powder, is removed to obtain a solid freeform fabrication object.

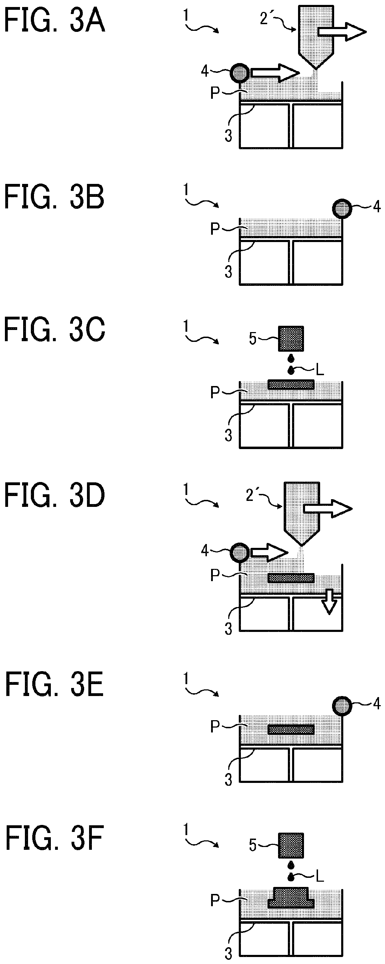

FIG. 3 (FIGs 3A to 3F) is a diagram illustrating another example of the method of manufacturing a solid freeform fabrication object of some embodiments.

The device for manufacturing a solid freeform fabrication object illustrated in FIG. 3 operates on the same principle as the device illustrated in FIG. 1. However both have different supplying mechanisms for the powder material P.

FIGs. 3A and 3B are diagrams illustrating the processes of supplying the powder material P from a movable powder storage tank 2' for supplying to the stage 3 of the powder storage tank 1 for fabrication and forming the powder material layer having a smooth surface. At this time, after the powder material P is supplied from the movable powder storage tank 2' for supplying onto the stage 3 of the powder storage tank 1 for fabrication, the gap with the stage 3 of the powder storage tank 1 for fabrication is controlled. Thereafter, the recoater 4 is moved to form a powder material layer having a desired thickness on the stage 3 of the powder storage tank 1 for fabrication.

FIG. 3C is a diagram illustrating the process of discharging the liquid material L to the powder material layer formed on the stage 3 of the powder storage tank 1 for fabrication using the inkjet head 5. At this time, the position where the liquid material L is discharged is determined by two-dimensional image data (slice data) obtained by slicing a solid freeform fabrication object to be fabricated into multiple plane layers.

FIGs. 3D and 3E are diagrams illustrating the processes of supplying the powder material P from the movable powder storage tank 2' for supplying to the stage 3 of the powder storage tank 1 for fabrication and forming the powder material layer having a smooth surface. At this time, after the stage 3 of the powder storage tank 1 for fabrication is descended and the powder material P is supplied from the movable powder storage tank 2' for supplying onto the stage 3 of the powder storage tank 1 for fabrication, the gap with the stage 3 of the powder storage tank 1 for fabrication is controlled. Thereafter, the recoater 4 is moved to form a powder material layer having a desired thickness on the stage 3 of the powder storage tank 1 for fabrication.

FIG. 3F is a diagram illustrating the process of discharging the liquid material L to the powder material layer formed on the stage 3 of the powder storage tank 1 for fabrication using the inkjet head 5. At this time, the position where the liquid material L is discharged is determined by two-dimensional image data (slice data) obtained by slicing a solid freeform fabrication object to be fabricated into multiple plane layers.

This series of processes is repeated and optionally the powder material P to which the liquid material L is attached is dried and the powder material P to which the liquid material L is not attached, that is, extra powder, is removed to obtain a solid freeform fabrication object.

The device for manufacturing a solid freeform fabrication object illustrated in FIG. 3 (3A to 3F) is advantageous in terms of compacting the size.

The method of manufacturing a solid freeform fabrication object illustrated in FIGs. 2 and 3 is an example of the method of manufacturing a solid freeform fabrication object of the present disclosure. The method of manufacturing a solid freeform fabrication object of the present disclosure is not limited to those.

Device for Manufacturing Solid Freeform Fabrication Object

The device for manufacturing a solid freeform fabrication object of this embodiment includes a device for forming a powder material layer (hereinafter referred to as powder material layer forming device) to form a powder material layer using the powder material and a device for applying the liquid material to a predetermined site of the powder material layer (hereinafter referred to as liquid material applying device). The device for manufacturing a solid freeform fabrication object of the present disclosure may furthermore include optional devices.

As the other devices, examples are a powder storage tank for supplying, a powder storage tank for fabrication, a powder material accommodating unit, a liquid material accommodating unit, a support (stage), and a smoothing mechanism (recoater).

Powder Storage Tank

The powder storage tank is classified into the powder storage tank for supplying (hereinafter referred to as supplying tank) and the powder storage tank for fabrication (hereinafter referred to as fabricating tank).

As an example of the supplying tank and the fabricating tank, the supplying tank 2 and the fabricating tank 1 illustrated in FIG. 2 are described.

Both of the supplying tank 2 and the fabricating tank 1 have tank-like forms or box-like forms and the supports (stages 3) constituting the bases of the tanks can be elevated up and down along a perpendicular direction. In addition, the supplying tank 2 and the fabricating tank 1 are disposed side by side. A solid freeform fabrication object is formed on the stage 3 of the fabricating tank 1.

The stage 3 of the supplying tank 2 is elevated up and a powder material P placed is supplied to the stage 3 of the supplying tank 2 utilizing a smoothing roller as the recoater 4. The recoater 4 smooths the upper surface of the powder material P placed on the stage 3 of the supplying tank 2 and the fabricating tank 1 to form a powder material layer.

A liquid material L is discharged to the powder material layer formed on the stage 3 of the supplying tank 2 utilizing the inkjet head 5. The head cleaning mechanism adheres to the inkjet head 5, suctions the liquid material L, and wipes off the discharging orifice.

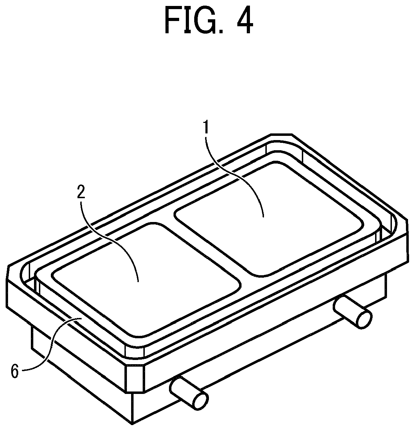

FIG. 4 is a diagram illustrating an example of the fabricating tank 1 and supplying tank 2 illustrated in FIG. 2.

Both of the supplying tank 2 and the fabricating tank 1 have tank-like forms or box-like forms with the upper faces of the two tanks open. Both of the supplying tank 2 and the fabricating tank 1 have stages 3 that can be elevated up and down in each of the inside. The stage 3 is disposed with the side plane in contact with the frame of the supplying tank 2 and the fabricating tank 1 and the upper surface of the stage 3 is held horizontally. Around the supplying tank 2 and the fabricating tank 1, a powder dropping hole 6 having a concave form is disposed with the upper surface open. Extra powder material accumulated by the smoothing roller when forming the powder material layer is dropped to the powder dropping hole 6. The extra powder that has dropped into the powder dropping hole 6 is returned to the inside of a powder supplying unit disposed above the fabricating tank 1 by an operator or a suction mechanism, if desired.

Support (Stage)

The support is not particularly limited as long as it can place a powder material and can be suitably selected to suit to a particular application. For example, a platform having a placement surface to place a powder material and a base plate of the device illustrated in FIG. 1 of Unexamined Japanese Patent Application Publication No. 2000-328106 are suitable.

The surface of the support, that is, the surface on which the powder material is placed can be smooth or coarse. Also, the surface can be plane or curved.

It is preferable that the surface of the support has a low affinity with a solid freeform fabrication object. If the affinity of the surface of the support and the solid freeform fabrication object is lower than that of metal particles and organic material particles, it is easy to take the obtained solid freeform fabrication object out of the surface of the support.

Powder Material Layer Forming Process and Powder Material Layer Forming Device

There is no specific limitation to the method of forming a powder material layer on a support and can be suitably selected to suit to a particular application. For example, as the method of forming a powder material layer on a support, a method of using a known counter rotation mechanism (counter roller) for use in a selective laser sintering method disclosed in Japanese Patent No. 3607300, a method of using a member such as a brush, a roller, and a blade, a method of using a pressure member, and a method of using a known powder additive manufacturing device are suitable.

An example of using such a known counter rotation mechanism (counter roller), a brush, a roller, and a blade, a pressure member, etc. to form a thin powder material layer on a support is described below.

The powder material layer is formed on a support disposed to elevate up and down slidably along the inside wall of an outer frame (also referred to as "form", "hollow cylinder" "tubular structure", etc.) by a counter rotation mechanism (counter roller), a brush, a blade, a pressing member, etc. At this point, when the support is movable up and down in the outer frame, the support is positioned slightly lower than the upper aperture of the outer frame. That is, while placing the support with a layer thickness of the powder material below the upper aperture, the powder material is placed on the support. That is how the thin powder material layer is formed on the support.

If a liquid material is applied to the thus-formed thin powder material layer, the organic material particle of the portion to which the liquid material is applied is dissolved. As a consequence, the metal particles are attached to each other.

If a liquid material is applied to the thus-formed thin powder material layer, the organic material particle of the portion to which the liquid material is applied is dissolved. As a consequence, the metal particles are attached. At this time, the attached metal particles are also attached to metal particles present on the powder material layer just below the thus-formed thin powder material layer. As a consequence, a solid freeform fabrication object having a thickness corresponding to about two layers of the thin powder material layers is obtained.

In addition, it is also possible to automatically and simply form a thin powder material layer on a support using a known powder additive manufacturing device.

A typical powder additive manufacturing device has a recoater to laminate a powder material, a movable supplying tank to supply the powder material onto the support, and a movable fabricating tank to form a thin layer of the powder material on the support and laminate thin layers. In the additive manufacturing device, the surface of the supplying tank can be constantly positioned slightly above the surface of the fabricating tank by moving up the supplying tank, moving down the fabricating tank, or both. In addition, the powder additive manufacturing device is capable of placing a powder material on a support by laminating thin powder material layers by repeatedly moving the recoater.

The average thickness of the powder material layer is preferably 30 - 500 $\mu$m, more preferably 40 - 300 $\mu$m, and furthermore preferably 50 - 150 $\mu$m. When the average thickness of the powder material layer is 30 $\mu$m or greater, the strength of a solid freeform fabrication object is enhanced so that problems such as losing shape during sintering or handling of the solid freeform fabrication object do not occur. When the average thickness is 500 μm or less, dimension accuracy of the solid freeform fabrication object is improved.

Incidentally, the average thickness of the powder material layer has no particular limitation and can be measured according to a known method.

Liquid Material Applying Process and Liquid Material Applying Device

The method of applying the liquid material to the powder material layer is not particularly limited and can be selected to a particular application. For example, a dispenser method, a spray method, or an inkjet method is suitable. To execute such a method, a known device is suitably used as the liquid material applying device. Of these, the inkjet method is particularly preferable. The inkjet method has a good quantitative property in comparison with the spray method and moreover a wider application area in comparison with the dispenser method. Accordingly, the inkjet method is preferable in order to accurately and efficiently form a complex 3D shape.

The liquid material applying device employing an inkjet method includes a nozzle capable of applying the liquid material to a powder material layer by the inkjet method. As the nozzle, nozzles in an inkjet head of a known inkjet printers can be suitably used.

In addition, it is possible to use an inkjet printer as a device to apply the liquid material. A preferred specific example of the inkjet printer is, for example, SG7100, manufactured by Ricoh Company Ltd. It is preferable to use an inkjet printer because the inkjet head can drip a large amount of ink at once and the application area is large, which leads to improvement of application performance.

The cross-linking agent can also serve as a pH regulator in liquid material.

pH of the liquid material is preferably from 5 (weak acidity) to 12 (basic) and more preferably from 8 to 10 (weak basic) in terms of prevention of clogging and corrosion of nozzle head portions of nozzles to apply the liquid material to the powder material layer according to an inkjet method.

To regulate the pH, known pH regulators may be used.

Powder Material Accommodating Unit

The device for manufacturing a solid freeform fabrication object may furthermore include a powder material accommodating unit in some embodiments.

The powder material accommodating unit accommodates powder material. The size, forms, materials, etc. thereof are not particularly limited and can be determined to suit to a particular application.

For example, a storage tank, a bag, a cartridge, or a tank is suitable as the powder material accommodating unit.

Liquid Material Accommodating Unit

The device for manufacturing a solid freeform fabrication object may furthermore include a liquid material accommodating unit in some embodiments.

The liquid material accommodating unit accommodates the liquid material. The size, forms, materials, etc. are not particularly limited and can be determined to suit to a particular application.

For example, a storage tank, a bag, a cartridge, or a tank is suitable as the liquid material accommodating unit.

Other Step and Other Device

The other processes include, for example, a drying process, a sintering process, a surface protection treatment process, and a coating (painting) process.

The other devices include, for example, a dryer, a sintering device, a surface protection treatment device, and a coating (painting) device (applicator).

The drying process includes drying a powder material layer to which a liquid application is applied. Due to the drying process, the solvent contained in the powder material layer to which the liquid material is applied so that metal particles are attached to each other to form a solid freeform fabrication object.

For example, known driers can be used as the drying device.

In this drying process, organic materials may be optionally removed, i.e., degreased).

Degreasing means treatment of removing resins. Due to degreasing, the resin portion is sufficiently removed from the powder material layer to which the liquid material is applied, which makes it possible to suppress occurrence of deformation or cracking of a sintered compact during the sintering treatment following the degreasing.

As the degreasing method, a sublimation method, a solvent extraction method, a natural drying method, or a heating method are suitable. Of these, the heating method is suitable.

In the present disclosure, the content rate of the organic material particle in the powder material is extremely small. Accordingly, degreasing takes very little time.

In the sintering step, a solid freeform fabrication object is sintered.

Sintering means consolidation of powder at high temperatures. Sintered compacts are obtained by sintering a powder material in a sintering furnace. As a result of sintering the powder material, metal particles contained in the powder material diffuse and grow so that a dense sintered compact having less voids with a high strength is obtained.

Due to the sintering process, the obtained solid freeform fabrication object becomes a unified metal sintered compact.

For example, a known sintering furnace can be used as the sintering device.

The conditions such as temperatures, time, atmospheres, and the temperature rising speed are determined depending on the composition of a powder material and degreased state, size, and form of a solid freeform fabrication object.

The sintering atmosphere has no particular limit. For example, in addition to the atmosphere, the sintering can be conducted in vacuum or with a reduced pressure, a non-oxidization atmosphere, or an atmosphere of inert gas such as nitrogen gas, and argon gas.

In addition, sintering can be conducted by two or more steps. For example, it is possible to conduct a primary sintering and a secondary sintering, both having different sintering conditions. In such a case, the sintering temperature, the sintering time, or the sintering atmosphere can be altered between the primary sintering and the secondary sintering.

In the surface protection treatment, a protection layer is formed on a solid freeform fabrication object or a sintered compact. By executing the surface protection treatment process, durability can be imparted to the surface of a solid freeform fabrication object or a sintered compact to such a degree that the object can be used as is.

Specific examples of the protection layer include, but are not limited to, a water-resistance layer, a weather resistance layer, a light resistance layer, a heat insulation layer, and a gloss layer.

Specific examples of the surface protection treatment device include, but are not limited to, known surface protection treatment devices such as a spraying device and a coating device.

In the painting process, a solid freeform fabrication object or a sintered compact is painted. Due to the painting process, a solid freeform fabrication objects or sintered compact can be painted with a desired color.

Specific examples of the coating (painting) device include, but are not limited to, known painting devices such as a spray, a roller, and a brush.

Having generally described preferred embodiments of this invention, further understanding can be obtained by reference to certain specific examples which are provided herein for the purpose of illustration only and are not intended to be limiting. In the descriptions in the following examples, the numbers represent weight ratios in parts, unless otherwise specified.

EXAMPLES

Next, the present disclosure is described in detail with reference to Examples but is not limited thereto.

Example 1

Manufacturing of Organic Material Particle 1

Polyvinyl alcohol (JMR-20H, density: 1.2 g/cm$^3$, manufactured by JAPAN VAM & POVAL CO., LTD.) as a water-soluble resin was spray-dried to prepare an organic material particle 1. The organic material particle 1 has a volume average particle diameter of 7.6 $\mu$m.

Manufacturing of Powder Material 1

1 part by mass (6.3 percent by volume) of the organic material particle 1 was admixed and stirred with 99 parts by mass (93.7 volume by mass) of stainless steel particle (SUS316L, PSS316L, volume average particle diameter: 8.1 $\mu$m, aspect ratio: 0.93, density: 7.98 g/cm$^3$, manufactured by SANYO SPECIAL STEEL Co., Ltd.) as a metal particle 1 by a stirrer to manufacture a powder material 1.

Volume Average Particle Diameter

Using a particle size measuring device (Microtrac HRA, manufactured by NIKKISO CO., LTD.), the volume average particle diameter of the organic material particle 1 and the metal particle 1 was measured.

Aspect Ratio

Morphologi G3-SE (manufactured by Spectris Co., Ltd.) was used to measure the aspect ratio (average) of the metal particle. At this time, filtering was conducted according to the relation: area enveloping degree of particle > 0.99 > 00 pixels to analyze the aspect ratio of only particles assumed to be primary particles. The measuring method is as follows.
Dispersive pressure: 4 bar
Compressed air application time: 10 ms
Time to rest: 60 seconds
Number of particles assumed to be primary particles: 50,000

Preparation of Liquid Material 1

70 parts by mass of water and 30 parts by mass of 1,2-propane diol (manufactured by Tokyo Chemical Industry Co. Ltd.) as an aqueous solvent were mixed and stirred to prepare a liquid material 1.

Manufacturing of Solid Freeform Fabrication Object 1

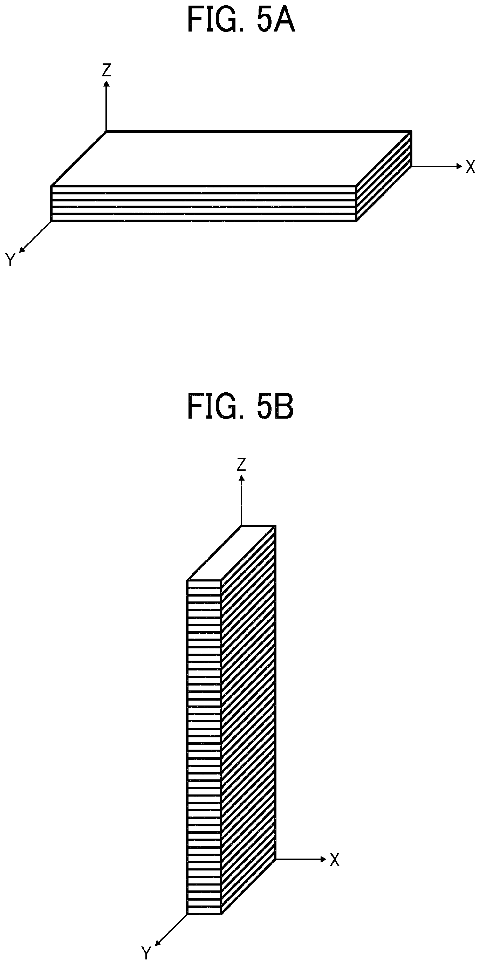

A solid freeform fabrication object 1 was manufactured by the manufacturing device (FIG. 2) of solid freeform fabrication objects using the inkjet head 5 and a counter roller as the recoater 4 according to the following method.
The powder material 1 and the liquid material 1 were respectively charged in the powder material accommodating unit and the liquid material accommodating unit of the manufacturing device of solid freeform fabrication objects. Subsequent to input of solid freeform fabrication data, the process illustrated in FIG. 2 was repeated to manufacture two kinds of samples having a reed-like form and a dumbbell-like form. The thickness of a single layer of the powder material layers was adjusted to be about 100 μm on average.
As the reed-like form sample, a horizontally layered sample (FIG. 5A) fabricated with the length direction set in the X-Y axis direction was manufactured.
As the dumbbell-like form sample, a horizontally layered sample and a perpendicularly layered sample (FIG. 5B) fabricated along the Z-axis direction were manufactured.
Thereafter, the reed-like form sample and the dumbbell-like form samples were air-dried for about three hours and placed in a drier for drying at 50 degrees C for three hours. Thereafter, powder material (extra powder) to which the liquid material 1 was not attached was blown away by air and placed in the drier again for drying at 100 degrees C for 12 hours followed by being cooled down to room temperature to obtain a solid freeform fabrication object 1.

Example 2

Manufacturing of Organic Material Particle 2

An organic material particle 2 was manufactured in the same manner as in the case of the organic material particle 1 except that polyvinyl alcohol (JMR-20H, density: 1.2 g/cm$^3$, manufactured by JAPAN VAM & POVAL CO., LTD.) was replaced with polyvinyl alcohol (JMR-10HH, density: 1.2 g/cm$^3$, manufactured by JAPAN VAM & POVAL CO., LTD.).
The organic material particle 2 had a volume average particle diameter of 3.3 μm.

Manufacturing of Powder Material 2

A powder material 2 was manufactured in the same manner as in the case of the powder material 1 except that the organic material particle 1 was replaced with the organic material particle 2.

Manufacturing of Solid Freeform Fabrication Object 2

A solid freeform fabrication object 2 was manufactured in the same manner as in the case of the solid freeform fabrication object 1 except that the powder material 1 was replaced with the powder material 2.

Example 3

Manufacturing of Organic Material Particle 3

An organic material particle 3 was manufactured in the same manner as in the case of the organic material particle 1 except that polyvinyl alcohol (JMR-20H, density: 1.2 g/cm$^3$, manufactured by JAPAN VAM & POVAL CO., LTD.) was replaced with acetoacetyl group-modified polyvinyl alcohol (Gohsenx™ Z-100, manufactured by The Nippon Synthetic Chemical Industry Co., Ltd.). The organic material particle 3 had a volume average particle diameter of 5.8 $\mu$m.

Manufacturing of Powder Material 3

A powder material 3 was manufactured in the same manner as in the case of the powder material 1 except that the organic material particle 1 was replaced with the organic material particle 3.

Preparation of Liquid Material 2

A liquid material 2 was prepared in the same manner as in the case of the liquid material 1 except that 3 parts of ammonium zirconium oxycarbonate (Zircosol AC-20, manufactured by DAIICHI KIGENSO KAGAKU KOGYO CO., LTD.) was further added as a cross-linking agent.

Manufacturing of Solid Freeform Fabrication Object 3

A solid freeform fabrication object 3 was manufactured in the same manner as in the case of the solid freeform fabrication object 1 except that the powder material 1 was replaced with the powder material 3 and the liquid material 1 was replaced with the liquid material 2.

Example 4

Manufacturing of Organic Material Particle 4

An organic material particle 4 was manufactured in the same manner as in the case of the organic material particle 1 except that polyvinyl alcohol (JMR-20H, density: 1.2 g/cm$^3$, manufactured by JAPAN VAM & POVAL CO., LTD.) was replaced with diacetone acrylamide group-modified polyvinyl alcohol (DF-05, density: 1.2 g/cm$^3$, manufactured by JAPAN VAM & POVAL CO., LTD.) as carbonyl group-modified polyvinyl alcohol. The organic material particle 4 had a volume average particle diameter of 10.5 $\mu$m.

Manufacturing of Powder Material 4

A powder material 4 was manufactured in the same manner as in the case of the powder material 1 except that the organic material particle 1 was replaced with the organic material particle 4.

Preparation of Liquid Material 3

A liquid material 3 was prepared in the same manner as in the case of the liquid material 1 except that 3 parts of adipic acid dihydrazide (ADH, manufactured by Nihon Kasei CO., LTD.) was further added as a cross-linking agent.

Manufacturing of Solid Freeform Fabrication Object 4

A solid freeform fabrication object 4 was manufactured in the same manner as in the case of the solid freeform fabrication object 1 except that the powder material 1 was replaced with the powder material 4 and the liquid material 1 was replaced with the liquid material 3.

Example 5

Manufacturing of Organic Material Particle 5

An organic material 5 was manufactured in the same manner as in the case of the organic material particle 4 except that the condition of the spray-drying was changed. The organic material particle 5 had a volume average particle diameter of 12.0 μm.

Manufacturing of Powder Material 5

A powder material 5 was manufactured in the same manner as in the case of the powder material 1 except that the organic material particle 1 was replaced with the organic material particle 5.

Manufacturing of Solid Freeform Fabrication Object 5

A solid freeform fabrication object 5 was manufactured in the same manner as in the case of the solid freeform fabrication object 4 except that the powder material 4 was replaced with the powder material 5.

Example 6

Manufacturing of Organic Material Particle 6

An organic material 6 was manufactured in the same manner as in the case of the organic material particle 4 except that the condition of the spray-drying was changed. The organic material particle 6 had a volume average particle diameter of 14.8 μm.

Manufacturing of Powder Material 6

A powder material 6 was manufactured in the same manner as in the case of the powder material 1 except that the organic material particle 1 was replaced with the organic material particle 6.

Manufacturing of Solid Freeform Fabrication Object 6

A solid freeform fabrication object 6 was manufactured in the same manner as in the case of the solid freeform fabrication object 4 except that the powder material 4 was replaced with the powder material 6.

Example 7

Manufacturing of Powder Material 7

A powder material 7 was manufactured in the same manner as in the case of the powder material 1 except that the addition amount of the metal particle 1 was changed to 99.6 parts by mass (97.4 percent by volume) and the addition amount of the organic material particle 1 was changed to 0.4 parts by mass (2.6 percent by volume).

Manufacturing of Solid Freeform Fabrication Object 7

A solid freeform fabrication object 7 was manufactured in the same manner as in the case of the solid freeform fabrication object 1 except that the powder material 1 was replaced with the powder material 7.

Example 8

Manufacturing of Powder Material 8

A powder material 8 was manufactured in the same manner as in the case of the powder material 1 except that the addition amount of the metal particle 1 was changed to 98 parts by mass (88.1 percent by volume) and the addition amount of the organic material particle 1 was changed to 2 parts by mass (11.9 percent by volume).

Manufacturing of Solid Freeform Fabrication Object 8

A solid freeform fabrication object 8 was manufactured in the same manner as in the case of the solid freeform fabrication object 1 except that the powder material 1 was replaced with the powder material 8.

Example 9

Manufacturing of Powder Material 9

A powder material 9 was manufactured in the same manner as in the case of the powder material 1 except that the addition amount of the metal particle 1 was changed to 97 parts by mass (82.9 percent by volume) and the addition amount of the organic material particle 1 was changed to 3 parts by mass (17.1 percent by volume).

Manufacturing of Solid Freeform Fabrication Object 9

A solid freeform fabrication object 9 was manufactured in the same manner as in the case of the solid freeform fabrication object 1 except that the powder material 1 was replaced with the powder material 9.

Example 10

Manufacturing of Powder Material 10

A powder material 10 was manufactured in the same manner as in the case of the powder material 5 except that the metal particle 1 was changed to stainless steel particle (SUS316L, PSS316L, volume average particle diameter: 12.0 $\mu$m, aspect ratio: 0.93, density: 7.98 g/cm$^3$, manufactured by SANYO SPECIAL STEEL Co., Ltd.) as a metal particle 2.

Manufacturing of Solid Freeform Fabrication Object 10

A solid freeform fabrication object 10 was manufactured in the same manner as in the case of the solid freeform fabrication object 5 except that the powder material 5 was replaced with the powder material 10.

Example 11

Manufacturing of Powder Material 11

A powder material 11 was manufactured in the same manner as in the case of the powder material 5 except that the metal particle 1 was changed to stainless steel particle (SUS316L, PSS316L, volume average particle diameter: 44.7 $\mu$m, aspect ratio: 0.91, density: 7.98 g/cm$^3$, manufactured by SANYO SPECIAL STEEL Co., Ltd.) as a metal particle 3.

Manufacturing of Solid Freeform Fabrication Object 11

A solid freeform fabrication object 11 was manufactured in the same manner as in the case of the solid freeform fabrication object 5 except that the powder material 5 was replaced with the powder material 11.

Example 12

Manufacturing of Powder Material 12

A powder material 12 was manufactured in the same manner as in the case of the powder material 4 except that the metal particle 1 was changed to titanium alloy particle (TILOP 64-45, volume average particle diameter: 34.5 $\mu$m, aspect ratio: 0.90, density: 4.43 g/cm$^3$, manufactured by OSAKA Titanium technologies Co., Ltd.).

Manufacturing of Solid Freeform Fabrication Object 12

A solid freeform fabrication object 12 was manufactured in the same manner as in the case of the solid freeform fabrication object 4 except that the powder material 4 was replaced with the powder material 12.

Example 13

Manufacturing of Powder Material 13

A powder material 13 was manufactured in the same manner as in the case of the powder material 12 except that the addition amount of the metal particle 4 was changed to 95 parts by mass (83.7 percent by volume) and the addition amount of the organic material particle 4 was changed to 5 parts by mass (16.3 percent by volume).

Manufacturing of Solid Freeform Fabrication Object 13

A solid freeform fabrication object 13 was manufactured in the same manner as in the case of the solid freeform fabrication object 12 except that the powder material 12 was replaced with the powder material 13.

Example 14

Manufacturing of Powder Material 14

A powder material 14 was manufactured in the same manner as in the case of the powder material 4 except that the metal particle 1 was changed to aluminum particle (TFS-A10P, volume average particle diameter: 10 $\mu$m, aspect ratio: 0.88, density: 2.7 g/cm$^3$, manufactured by Toyo Aluminium K.K.).

Manufacturing of Solid Freeform Fabrication Object 14

A solid freeform fabrication object 14 was manufactured in the same manner as in the case of the solid freeform fabrication object 4 except that the powder material 4 was replaced with the powder material 14.

Example 15

Manufacturing of Powder Material 15

A powder material 15 was manufactured in the same manner as in the case of the powder material 14 except that the addition amount of the metal particle 5 was changed to 95 parts by mass (89.4 percent by volume) and the addition amount of the organic material particle 4 was changed to 5 parts by mass (10.6 percent by volume).

Manufacturing of Solid Freeform Fabrication Object 15

A solid freeform fabrication object 15 was manufactured in the same manner as in the case of the solid freeform fabrication object 14 except that the powder material 14 was replaced with the powder material 15.

Example 16

Manufacturing of Powder Material 16

A powder material 16 was manufactured in the same manner as in the case of the powder material 4 except that the metal particle 1 was changed to copper particle (TYPE-T, volume average particle diameter: 6.0 $\mu$m, aspect ratio: 0.86, density: 8.9 g/cm$^3$, manufactured by DOWA Electronics Materials Co., Ltd.).

Manufacturing of Solid Freeform Fabrication Object 16

A solid freeform fabrication object 16 was manufactured in the same manner as in the case of the solid freeform fabrication object 4 except that the powder material 4 was replaced with the powder material 16.

Example 17

Manufacturing of Powder Material 17

A powder material 17 was manufactured in the same manner as in the case of the powder material 16 except that the addition amount of the metal particle 6 was changed to 98 parts by mass (86.9 percent by volume) and the addition amount of the organic material particle 4 was changed to 2 parts by mass (13.1 percent by volume).

Manufacturing of Solid Freeform Fabrication Object 16

A solid freeform fabrication object 17 was manufactured in the same manner as in the case of the solid freeform fabrication object 16 except that the powder material 16 was replaced with the powder material 17.

Example 18

Manufacturing of Organic Material Particle 7

An organic material particle 7 was manufactured in the same manner as in the case of the organic material particle 1 except that polyvinyl alcohol (JMR-20H, density: 1.2 g/cm$^3$, manufactured by JAPAN VAM & POVAL CO., LTD.) was replaced with polyethyleneoxide (ALKOX L-11, density: 1.1 g/cm$^3$, manufactured by Meisei Chemical Works, Ltd.). The organic material particle 7 had a volume average particle diameter of 3.3 $\mu$m.

Manufacturing of Powder Material 18

A powder material 18 was manufactured in the same manner as in the case of the powder material 1 except that the organic material particle 1 was replaced with the organic material particle 7.

Manufacturing of Solid Freeform Fabrication Object 18

A solid freeform fabrication object 18 was manufactured in the same manner as in the case of the solid freeform fabrication object 1 except that the powder material 1 was replaced with the powder material 18.

Example 19

Manufacturing of Powder Material 19

A powder material 19 was manufactured in the same manner as in the case of the powder material 18 except that the metal particle 1 was replaced with the metal particle 3.

Manufacturing of Solid Freeform Fabrication Object 19

A solid freeform fabrication object 19 was manufactured in the same manner as in the case of the solid freeform fabrication object 18 except that the powder material 18 was replaced with the powder material 19.

Example 20

Manufacturing of Organic Material Particle 8

An organic material particle 8 was manufactured in the same manner as in the case of the organic material particle 1 except that polyvinyl alcohol (JMR-20H, density: 1.2 g/cm$^3$, manufactured by JAPAN VAM & POVAL CO., LTD.) was replaced with polyacylic acid (AQUALIC AS, manufactured by Nippon Shokubai Co., Ltd.) and the spray-drying was changed to frost shattering.
The organic material particle 8 had a volume average particle diameter of 14.3 $\mu$m.

Manufacturing of Powder Material 20

A powder material 20 was manufactured in the same manner as in the case of the powder material 1 except that the organic material particle 1 was replaced with the organic material particle 8.

Manufacturing of Solid Freeform Fabrication Object 20

A solid freeform fabrication object 20 was manufactured in the same manner as in the case of the solid freeform fabrication object 1 except that the powder material 1 was replaced with the powder material 20.

Example 21

Manufacturing of Powder Material 21

A powder material 21 was manufactured in the same manner as in the case of the powder material 20 except that the metal particle 1 was replaced with the metal particle 6.

Manufacturing of Solid Freeform Fabrication Object 21

A solid freeform fabrication object 21 was manufactured in the same manner as in the case of the solid freeform fabrication object 20 except that the powder material 20 was replaced with the powder material 21.

Example 22

Manufacturing of Organic Material Particle 9

An organic material particle 9 was manufactured in the same manner as in the case of the organic material particle 1 except that polyvinyl alcohol (JMR-20H, density: 1.2 g/cm$^3$, manufactured by JAPAN VAM & POVAL CO., LTD.) was replaced with a copolymer of butanediol and vinyl alcohol (G-POLYMER OKS 8041, density: 1.2 g/cm$^3$, manufactured by The Nippon Synthetic Chemical Industry Co., Ltd.). The organic material particle 9 had a volume average particle diameter of 8.8 $\mu$m.

Manufacturing of Powder Material 22

A powder material 22 was manufactured in the same manner as in the case of the powder material 12 except that the organic material particle 4 was replaced with the organic material particle 9.

Manufacturing of Solid Freeform Fabrication Object 22

A solid freeform fabrication object 22 was manufactured in the same manner as in the case of the solid freeform fabrication object 12 except that the powder material 12 was replaced with the powder material 22.

Example 23

Manufacturing of Metal Particle 7

A metal particle 7 was manufactured by subjecting the metal particle 2 to vibration milling using zirconia beads. The metal particle 7 had a volume average particle diameter of 9.2 $\mu$m and the aspect ratio was 0.81.

Manufacturing of Powder Material 23

A powder material 23 was manufactured in the same manner as in the case of the powder material 10 except that the metal particle 2 was replaced with the metal particle 7.

Manufacturing of Solid Freeform Fabrication Object 23

A solid freeform fabrication object 23 was manufactured in the same manner as in the case of the solid freeform fabrication object 10 except that the powder material 10 was replaced with the powder material 23.

Comparative Example 1

Manufacturing of Solid Freeform Fabrication Object 24

Manufacturing a solid freeform fabrication object 24 was tried in the same manner as in the case of the solid freeform fabrication object 1 except that the powder material 1 was replaced with the metal particle 1. However, when extra powder was blown away by air, no object appeared. That is, it was not possible to manufacture the solid freeform fabrication object 24.

Comparative Example 2

Manufacturing of Powder Material 24

A powder material 24 was manufactured in the same manner as in the case of the powder material 1 except that the organic material particle 1 was changed to a non-water-soluble silicone resin particle (Tospearl 2000B, volume average particle diameter: 6.0 $\mu$m, density: 1.32 g/cm$^3$).

Manufacturing of Solid Freeform Fabrication Object 25

Manufacturing a solid freeform fabrication object 25 was tried in the same manner as in the case of the solid freeform fabrication object 1 except that the powder material 1 was replaced with the powder material 24. However, when extra powder was blown away by air, no object appeared. That is, it was not possible to manufacture the solid freeform fabrication object 25.

Comparative Example 3

Preparation of Liquid Material 4

A liquid material 4 was prepared in the same manner as in the case of the liquid material 1 except that 6 parts of the organic material particle 1 was added and dissolved.

Manufacturing of Solid Freeform Fabrication Object 26

A solid freeform fabrication object 26 was manufactured in the same manner as in the case of the solid freeform fabrication object 24 except that the liquid material 1 was replaced with the liquid material 4.

Comparative Example 4

Manufacturing of Powder Material 25

A powder material 25 was manufactured in the same manner as in the case of the powder material 1 except that the addition amount of the metal particle 1 was changed to 96.5 parts by mass (80.6 percent by volume) and the addition amount of the organic material particle 1 was changed to 3.5 parts by mass (19.4 percent by volume).

Manufacturing of Solid Freeform Fabrication Object 27

A solid freeform fabrication object 27 was manufactured in the same manner as in the case of the solid freeform fabrication object 1 except that the powder material 1 was replaced with the powder material 25.

Comparative Example 5

Manufacturing of Powder Material 26

A powder material 26 was manufactured in the same manner as in the case of the powder material 1 except that the addition amount of the metal particle 1 was changed to 90 parts by mass (57.5 percent by volume) and the addition amount of the organic material particle 1 was changed to 10 parts by mass (21.7 percent by volume).

Manufacturing of Solid Freeform Fabrication Object 28

A solid freeform fabrication object 28 was manufactured in the same manner as in the case of the solid freeform fabrication object 1 except that the powder material 1 was replaced with the powder material 26.

Comparative Example 6

Manufacturing of Organic Material Particle 11

An organic material 11 was manufactured in the same manner as in the case of the organic material particle 1 except that the condition of the spray-drying was changed to frost shattering. The organic material particle 11 had a volume average particle diameter of 19.8 $\mu$m.

Manufacturing of Powder Material 27

A powder material 27 was manufactured in the same manner as in the case of the powder material 1 except that the organic material particle 1 was replaced with the organic material particle 11.

Manufacturing of Solid Freeform Fabrication Object 29

A solid freeform fabrication object 29 was manufactured in the same manner as in the case of the solid freeform fabrication object 1 except that the powder material 1 was replaced with the powder material 27.

Comparative Example 7

Manufacturing of Organic Material Particle 12

An organic material 12 was manufactured in the same manner as in the case of the organic material particle 11 except that the condition of the frost shattering was changed. The organic material particle 12 had a volume average particle diameter of 50.3 $\mu$m.

Manufacturing of Powder Material 28

A powder material 28 was manufactured in the same manner as in the case of the powder material 1 except that the organic material particle 1 was replaced with the organic material particle 12.

Manufacturing of Solid Freeform Fabrication Object 30

A solid freeform fabrication object 30 was manufactured in the same manner as in the case of the solid freeform fabrication object 1 except that the powder material 1 was replaced with the powder material 28.

Properties of respective organic material particles 1 - 12, metal particles 1 - 7, powder materials 1 - 28, and liquid materials 1 - 4 are shown in Tables 1 - 4.

Table 1

| Organic material particle | Material | Volume average particle diameter $D_O$ ($\mu$m) |
|---|---|---|
| 1 | Polyvinyl alcohol | 7.6 |
| 2 | Polyvinyl alcohol | 3.3 |
| 3 | Acetoacetyl group-modified polyvinyl alcohol | 5.8 |
| 4 | Carbonyl group-modified polyvinyl alcohol | 10.5 |
| 5 | Carbonyl group-modified polyvinyl alcohol | 12.0 |
| 6 | Carbonyl group-modified polyvinyl alcohol | 14.8 |
| 7 | Polyethylene oxide | 6.4 |
| 8 | Polyacrylic acid | 14.3 |
| 9 | Copolymer of butane diol and vinyl alcohol | 8.8 |
| 10 | Silicone resin | 6.0 |
| 11 | Polyvinyl alcohol | 19.8 |
| 12 | Polyvinyl alcohol | 50.3 |

Table 2

| Metal particle | Material | Volume average particle diameter $D_M$ ($\mu$m) | Aspect ratio |
|---|---|---|---|
| 1 | Stainless steel | 8.1 | 0.93 |
| 2 | Stainless steel | 12.0 | 0.93 |
| 3 | Stainless steel | 44.7 | 0.91 |
| 4 | Titanium alloy | 34.5 | 0.90 |

(continued)

| Metal particle | Material | Volume average particle diameter $D_M$ ($\mu$m) | Aspect ratio |
|---|---|---|---|
| 5 | Aluminum | 10.0 | 0.88 |
| 6 | Copper | 6.0 | 0.86 |
| 7 | Stainless steel | 9.2 | 0.81 |

Table 3

| Powder material | Organic material particle | | | Metal particle | | $D_M/D_O$ |
|---|---|---|---|---|---|---|
| | Kind | Content rate | | Kind | Content rate | |
| | | | (Percent by volume) | | (Percent by volume) | |
| 1 | | 1 | 6.3 | 1 | 93.7 | 1.07 |
| 2 | | 2 | 6.3 | 1 | 93.7 | 2.45 |
| 3 | | 3 | 6.3 | 1 | 93.7 | 1.40 |
| 4 | | 4 | 6.3 | 1 | 93.7 | 0.77 |
| 5 | | 5 | 6.3 | 1 | 93.7 | 0.68 |
| 6 | | 6 | 6.3 | 1 | 93.7 | 0.55 |
| 7 | | 1 | 2.6 | 1 | 97.4 | 1.07 |
| 8 | | 1 | 11.9 | 1 | 88.1 | 1.07 |
| 9 | | 1 | 17.1 | 1 | 82.9 | 1.07 |
| 10 | | 5 | 6.3 | 2 | 93.7 | 1.00 |
| 11 | | 5 | 6.3 | 3 | 93.7 | 3.73 |
| 12 | | 4 | 3.6 | 4 | 86.4 | 3.29 |
| 13 | | 4 | 16.3 | 4 | 83.7 | 3.29 |
| 14 | | 4 | 2.2 | 5 | 97.8 | 0.95 |
| 15 | | 4 | 10.6 | 5 | 89.4 | 0.95 |
| 16 | | 4 | 7.0 | 6 | 93.0 | 0.57 |
| 17 | | 4 | 13.1 | 6 | 86.9 | 0.57 |
| 18 | | 7 | 6.8 | 1 | 93.2 | 1.27 |
| 19 | | 7 | 6.8 | 3 | 93.2 | 6.98 |
| 20 | | 8 | 6.8 | 1 | 93.2 | 0.57 |
| 21 | | 8 | 7.6 | 6 | 92.4 | 0.42 |
| 22 | | 9 | 3.6 | 4 | 96.4 | 3.92 |
| 23 | | 5 | 6.3 | 7 | 93.7 | 0.77 |
| 24 | | 10 | 5.8 | 1 | 94.2 | 1.35 |
| 25 | | 1 | 19.4 | 1 | 80.6 | 1.07 |
| 26 | | 1 | 42.5 | 1 | 57.5 | 1.07 |
| 27 | | 11 | 6.3 | 1 | 93.7 | 0.41 |
| 28 | | 12 | 6.3 | 1 | 93.7 | 0.16 |

Table 4

| Liquid material | Water | Aqueous solvent | | Cross-linking agent | | Organic material particle | |
|---|---|---|---|---|---|---|---|
| | Content (part by mass) | Kind | Content (part by mass) | Kind | Content (part by mass) | Kind | Content (part by mass) |
| 1 | 70 | 1,2-propane diol | 30 | - | - | - | - |
| 2 | 70 | 1,2-propane diol | 30 | ammonium zirconium oxycarbonate | 3 | - | - |
| 3 | 70 | 1,2-propane diol | 30 | adipic acid dihydrazide | 3 | - | - |
| 4 | 70 | 1,2-propane diol | 30 | - | - | 1 | - |

Next, with regard to the solid freeform fabrication objects 1 -23 and 26 - 30, bend stress, removability of extra powder, agglomerating property of extra powder, and dimension accuracy were evaluated.

Bend Stress

The three-point bend stress of the solid freeform fabrication objects 1 -23 and 26 - 30 was measured using a precision universal tester (Autograph AGS-J, manufactured by Shimadzu Corporation). More specifically, using the horizontally-layered sample having a reed-like form as the solid freeform fabrication object, the maximum stress when the solid freeform fabrication object was broken was measured. The evaluation criteria of bend stress are as follows.
G (Good): maximum stress is 9.0 MPa or greater
A (Acceptable): maximum stress is 5.0 to less than 9.0 MPa
M (Marginal): maximum stress is 1.0 to less than 5.0 MPa
P (Poor): maximum stress is less than 1.0 MPa

Removability of Extra Powder

The dimension and the thickness of the solid freeform fabrication objects 1 -23 and 26 -30 were measured. The degree of degradation of the dimension accuracy caused by attachment of extra powder, that is, removability of the extra powder was evaluated. The evaluation criteria of extra powder are as follows.
G (Good): target dimension and thickness secured with smooth surface
A (Acceptable): slightly different from the target but difference not visible
M (Marginal): extra powder attached to surface, which degrades the accuracy of the dimension, thickness, smoothness of surface
P (Poor): massive amount of extra powder attached, causing deformation of shape, requiring scraping off extra powder

Agglomerating Property of Extra Powder

After taking the extra powder removed by air blow when manufacturing the solid freeform fabrication objects 1 -23 and 26 -30, the extra powder was screened by a sieve having an opening size of 100 $\mu$m. The agglomerating property was evaluated based on the amount of the agglomerated matter of the extra powder remaining on the sieve. The evaluation criteria of extra powder are as follows.
G (Good): agglomerated matter of extra powder never or little seen on sieve
A (Acceptable): agglomerated matter of extra powder slightly remaining on sieve but sufficiently small and easily breakable
M (Marginal): relatively large amount of agglomerated matter remaining on sieve, requiring pulverization for reuse

P (Poor): agglomerated matter of extra powder remaining on sieve forming a chunk, requiring long-hour pulverization for reuse

Dimension Accuracy

Based on CAD data, the solid freeform fabrication objects 1 -23 and 26 -30 were manufactured and the dimensions of the thus-obtained solid freeform fabrication objects were measured to make comparisons with the CAD data. In addition, straightness and surface roughness were evaluated. The evaluation criteria of the dimension accuracy are as follows.

G (Good): No or little difference from CAD data and no defects can be visibly confirmed
A (Acceptable): Slight difference on dimension but not easily recognized, causing no defective problems
M (Marginal): Obvious: difference on dimension and defects easily visible and recognizable
P (Poor): Significant difference on dimension and great defects distinguishable

Manufacturing of Sintered Compacts 1 - 23 and 26 - 30

The solid freeform fabrication objects 1 - 23 and 26 - 30 were placed in a drier and heated in nitrogen atmosphere for degreasing. Thereafter, the resultant was subject to sintering treatment at 1,300 degrees C in a sintering furnace in vacuum condition to manufacture sintered compacts 1 - 23 and 26 - 30.

Next, aeolotropy of stretching stress of the sintered compacts 1 - 23 and 26 - 30 was evaluated.

Aeolotropy of Stretching Stress of Sintered Compacts 1 - 23 and 26 - 30

The stretching stress of the sintered compacts 1 - 23 and 26 - 30 was measured using a precision universal tester (Autograph AGS-J, manufactured by Shimadzu Corporation). More specifically, using the horizontally-layered sample having a dumbbell-like form and a vertically-layered sample as the sintered compact, the maximum stress was measured when each of the sintered compacts was broken. The evaluation criteria of aeolotropy of stretching stress are as follows.

G (Good): Maximum stress of vertically-layered sample is no less than 90 percent of maximum stress of horizontally-layered sample
A (Acceptable): Maximum stress of vertically-layered sample is no less than 80 percent of maximum stress of horizontally-layered sample
M (Marginal): Maximum stress of vertically-layered sample is no less than 70 percent of maximum stress of horizontally-layered sample
P (Poor): Maximum stress of vertically-layered sample is less than 70 percent of maximum stress of horizontally-layered sample

The evaluation results of bend stress, removability of extra powder, agglomerating property of extra powder, dimension accuracy, and aeolotropy of the sintered compacts 1 - 23 and 26 - 30 are shown in Table 5.

Table 5

| | Solid freeform fabrication object (sintered compact) | | | | Solid freeform fabrication object | | | |
| | Kind | Powder material | Liquid material | Metal particle | Bend stress | Removability of extra powder | Agglomerating property of extra powder | Dimension accuracy |
|---|---|---|---|---|---|---|---|---|
| Example 1 | 1 | 1 | 1 | - | G, A | G | G | G |
| Example 2 | 2 | 2 | 1 | - | A | G | G | G |
| Example 3 | 3 | 3 | 2 | - | G | G | G | G |
| Example 4 | 4 | 4 | 3 | - | G | G | G | G |
| Example 5 | 5 | 5 | 3 | - | G | G | G | G |
| Example 6 | 6 | 6 | 3 | - | G | A | G | A |
| Example 7 | 7 | 7 | 1 | - | A | G | G | G |
| Example 8 | 8 | 8 | 1 | - | G | G, A | G | A |
| Example 9 | 9 | 9 | 1 | - | G | A | A | A |

| Example 10 | 10 | 10 | 3 | - | G, A | G | G | G |
|---|---|---|---|---|---|---|---|---|
| Example 11 | 11 | 11 | 3 | - | A | G | G | G |
| Example 12 | 12 | 12 | 3 | - | A | G | G | G |
| Example 13 | 13 | 13 | 3 | - | G | A | A | A |
| Example 14 | 14 | 14 | 3 | - | A | G | G | G |
| Example 15 | 15 | 15 | 3 | - | G | A | A | A |
| Example 16 | 16 | 16 | 3 | - | G | G | G | G |
| Example 17 | 17 | 17 | 3 | - | G | A | G, A | A |
| Example 18 | 18 | 18 | 1 | - | G, A | G | G | G |
| Example 19 | 19 | 19 | 1 | - | A | G | G | G |
| Example 20 | 20 | 20 | 1 | - | A | G | A | G |
| Example 21 | 21 | 21 | 1 | - | A | G | A | G |
| Example 22 | 21 | 21 | 3 | - | G | A | A | A |
| Example 23 | 23 | 23 | 3 | - | A | G | G | G |
| Comparative Example 1 | 24 | - | 1 | 1 | - | - | - | - |
| Comparative Example 2 | 25 | 24 | 1 | - | - | - | - | - |
| Comparative Example 3 | 26 | - | 4 | 1 | A, M | G | A | A, M |
| Comparative Example 4 | 27 | 25 | 1 | - | G | M | M | M |
| Comparative Example 5 | 28 | 26 | 1 | - | G | P | M | P |
| Comparative Example 6 | 29 | 27 | 1 | - | G | M | G | M |
| Comparative Example 7 | 30 | 28 | 1 | - | A | P | A | P |

| | Solid freeform fabrication object (sintered compact) | | | | Sintered compact |
|---|---|---|---|---|---|
| | Kind | Powder material | Liquid material | Metal particle | Aeolotropy of stretching stress |
| Example 1 | 1 | 1 | 1 | - | G |
| Example 2 | 2 | 2 | 1 | - | G |

| | | | | | |
|---|---|---|---|---|---|
| Example 3 | 3 | 3 | 2 | - | G |
| Example 4 | 4 | 4 | 3 | - | G |
| Example 5 | 5 | 5 | 3 | - | G |
| Example 6 | 6 | 6 | 3 | - | G |
| Example 7 | 7 | 7 | 1 | - | G |
| Example 8 | 8 | 8 | 1 | - | G |
| Example 9 | 9 | 9 | 1 | - | G |
| Example 10 | 10 | 10 | 3 | - | G, A |
| Example 11 | 11 | 11 | 3 | - | A |
| Example 12 | 12 | 12 | 3 | - | G |
| Example 13 | 13 | 13 | 3 | - | G |
| Example 14 | 14 | 14 | 3 | - | G |
| Example 15 | 15 | 15 | 3 | - | G |
| Example 16 | 16 | 16 | 3 | - | G |
| Example 17 | 17 | 17 | 3 | - | G |
| Example 18 | 18 | 18 | 1 | - | G |
| Example 19 | 19 | 19 | 1 | - | A |
| Example 20 | 20 | 20 | 1 | - | G |
| Example 21 | 21 | 21 | 1 | - | G |
| Example 22 | 21 | 21 | 3 | - | A |
| Example 23 | 23 | 23 | 3 | - | A |
| Comparative Example 1 | 24 | - | 1 | 1 | - |
| Comparative Example 2 | 25 | 24 | 1 | - | - |
| Comparative Example 3 | 26 | - | 4 | 1 | M |
| Comparative Example 4 | 27 | 25 | 1 | - | A |
| Comparative Example 5 | 28 | 26 | 1 | - | M |
| Comparative Example 6 | 29 | 27 | 1 | - | M |

| Comparative Example 7 | 30 | 28 | 1 | - | P |
|---|---|---|---|---|---|

As seen in the results shown in Table 5, the solid freeform fabrication objects 1 - 23 of Examples 1 - 23 have high removability of extra powder, low agglomerating property of extra powder, and good strength. In addition, the sintered compacts 1 - 23 obtained by sintering the solid freeform fabrication objects 1 - 23 have good strength in the Z axis direction and low aeolotropy of strength in the X-axis, Y-axis, and Z-axis.

On the other hand, since no powder material 1 but the metal particle 1 was used in Comparative Example 1, it was not possible to manufacture the solid freeform fabrication object 24.

Since the powder material 24 including non-water-soluble silicone resin particle was used as the organic material particle 10 in Comparative Example 2, it was not possible to manufacture the solid freeform fabrication object 25.

Since the metal particle 1 was used instead of the powder material 1 and the liquid material 4 in which the organic material particle 1 was dissolved was used for the solid freeform fabrication object 26 in Comparative Example 3, strength is good. In addition, the sintered compact 26 obtained by sintering the solid freeform fabrication object 26 has a weak strength in the Z axis direction and a high aeolotropy of strength in the X-axis, Y-axis, and Z-axis.

Since the powder material 25 including the organic material particle 1 in an amount of 19.4 percent by volume was used in the solid freeform fabrication object 27 in Comparative Example 4, removability of extra powder is low and agglomerating property of extra powder is high.

Since the powder material 26 including the organic material particle 1 in an amount of 42.5 percent by volume was used in the solid freeform fabrication object 28 of Comparative Example 5, removability of extra powder is low and agglomerating property of extra powder is high. In addition, the sintered compact 28 obtained by sintering the solid freeform fabrication object 28 has a weak strength in the Z axis direction and a high aeolotropy of strength in the X-axis, Y-axis, and Z-axis.

Since the powder material 27 including the organic material particle 11 having a volume average particle diameter of 19.8 $\mu$m was used for the solid freeform fabrication object 29 of Comparative Example 6, removability of extra powder is low. In addition, the sintered compact 29 obtained by sintering the solid freeform fabrication object 29 has a weak strength in the Z axis direction and a high aeolotropy of strength in the X-axis, Y-axis, and Z-axis.

Since the powder material 28 including the organic material particle 12 having a volume average particle diameter of 50.3 $\mu$m was used for the solid freeform fabrication object 30 of Comparative Example 7, removability of extra powder is low. In addition, the sintered compact 30 obtained by sintering the solid freeform fabrication object 30 has a weak strength in the Z axis direction and a high aeolotropy of strength in the X-axis, Y-axis, and Z-axis.

Reuse of Extra Powder

Extra powder for not use in fabrication when manufacturing the solid freeform fabrication object 1 of Example 1 was collected and stirred by a stirrer. A solid freeform fabrication object and a sintered compact were manufactured in the same manner as in Example 1 except that the extra powder was used as a powder material for reuse.

Bend stress of the thus-obtained solid freeform fabrication object and sintered compact was evaluated in the same manner as in Example 1. The bend stress was the same as that of Example 1. That is, reuse of extra powder was confirmed to be possible.

According to the present disclosure, a solid freeform fabrication powder material is obtained which is capable of ameliorating strength of a solid freeform fabrication object and suppressing deterioration of the dimension accuracy of the solid freeform fabrication object while extra powder of the powder material is easily removed and has a low agglomeration property.

A metal sintered compact is obtained which has a high strength in the lamination direction, i.e., z-axis direction, of a solid freeform fabrication object and a low aeolotropy in the X, Y, and Z-axis directions.

**Claims**

1. A solid freeform fabrication powder material consisting of:

   a metal particle,
   a water-soluble organic material particle, and
   optional components,
   wherein the water-soluble organic material particle accounts for 2 - 18 percent by volume of the solid freeform fabrication powder material consisting of the metal particle and the water-soluble organic material particle and any optional components, and

wherein the water-soluble organic material particle has a volume average particle diameter of 3 - 15 $\mu$m, and a volume average particle diameter ratio of the metal particle to the water-soluble organic material particle is 0.5 - 3.5.

2. The solid freeform fabrication powder material according to claim 1, wherein an aspect ratio average value calculated according to the following relation 1 of the metal particle is 0.85 or greater:

$$\text{Aspect ratio (average value)} = (X1 \times Y1 + X2 \times Y2 + \bullet\bullet\bullet + Xn \times Yn) / 100, \qquad \text{Relation 1}$$

where Xi represents an aspect ratio (minor axis/major axis) of the metal particle, and Yi represents an existing percent rate of the metal particle having an aspect ratio of Xi, where i represents an integer of 1 to n and Y1 + Y2 + $\bullet\bullet\bullet$ + Yn = 100.

3. The solid freeform fabrication powder material according to claim 1 or 2, wherein the water-soluble organic material particle includes a polyvinyl alcohol resin.

4. The solid freeform fabrication powder material according to claim 3, wherein the polyvinyl alcohol resin includes a cross-linkable functional group.

5. The solid freeform fabrication powder material according to any preceding claim, wherein the optional components consist of one or more of the following: fluidizers, fillers, leveling agents, and sintering helping agents.

6. A solid freeform fabrication material set comprising:

   the solid freeform fabrication powder material of any one of claims 1 to 5; and
   a solid freeform fabrication liquid material including water.

7. The solid freeform fabrication material set according to claim 6, wherein the solid freeform fabrication liquid material further includes a cross-linking agent.

8. A method of manufacturing a solid freeform fabrication object comprising:

   forming a powder material layer of the solid freeform fabrication powder material of any one of claims 1 to 5; and
   applying a solid freeform fabrication liquid material including water to a predetermined area of the powder material layer.

9. The method according to claim 8, wherein the solid freeform fabrication liquid material further includes a cross-linking agent.

10. The method according to claim 8 or 9, wherein the solid freeform fabrication liquid material is applied by an inkjet method.

11. A method of manufacturing a sintered compact comprising:

    manufacturing a solid freeform fabrication object according to the method of any one of claims 8 to 10; and
    sintering the solid freeform fabrication object to manufacture the sintered compact.

12. A solid freeform fabrication object manufacturing device comprising:

    the solid freeform fabrication power material of any one of claims 1 to 5;
    a powder material layer forming device configured to form a powder material layer of the solid freeform fabrication power material; and
    a liquid material applying device configured to apply a solid freeform fabrication liquid material to a predetermined area of the powder material layer, the liquid material applying device employing an inkjet method.

**Patentansprüche**

1.  Festfreiformfertigungs-Pulvermaterial, bestehend aus:

    einem Metallpartikel,
    einem wasserlöslichen Partikel aus organischem Material, und
    wahlweisen Komponenten,
    wobei das wasserlösliche Partikel aus organischem Material 2 bis 18 Volumenprozent des Festfreiformfertigungs-Pulvermaterials ausmacht, das aus dem Metallpartikel und dem wasserlöslichen Partikel aus organischem Material und etwaigen wahlweisen Komponenten besteht, und
    wobei das wasserlösliche Partikel aus organischem Material einen volumengemittelten Partikeldurchmesser
    von 3 bis 15 μm aufweist und ein Verhältnis des volumengemittelten Durchmessers des Metallpartikels zu dem
    wasserlöslichen Partikel aus organischem Material 0,5 bis 3,5 beträgt.

2.  Festfreiformfertigungs-Pulvermaterial nach Anspruch 1, wobei ein Mittelwert des Höhe-Breite-Verhältnis des Metallpartikels, berechnet entsprechend der folgenden Beziehung 1, 0,85 oder mehr beträgt:

    $$\text{Mittelwert des Höhe-Breite-Verhältnisses} = (X1 \times Y1 + X2 \times Y2 + \bullet\bullet\bullet + Xn \times Yn)$$
    $$/ 100, \text{Beziehung 1,}$$

    wobei Xi ein Höhe-Breite-Verhältnis (kleine Achse/große Achse) des Metallpartikels darstellt und Yi einen vorhandenen prozentualen Anteil des Metallpartikels darstellt, das ein Höhe-Breite-Verhältnis von Xi aufweist, wobei i eine
    ganze Zahl von 1 bis n und Y1 + Y2 + + ••• Yn = 100 darstellt.

3.  Festfreiformfertigungs-Pulvermaterial nach Anspruch 1 oder 2, wobei das wasserlösliche Partikel aus organischem
    Material ein Polyvinylalkoholharz einschließt.

4.  Festfreiformfertigungs-Pulvermaterial nach Anspruch 3, wobei das Polyvinylalkoholharz eine vernetzbare funktionelle Gruppe einschließt.

5.  Festfreiformfertigungs-Pulvermaterial nach einem der vorhergehenden Ansprüche, wobei die wahlweisen Komponenten aus einem oder mehreren der folgenden bestehen: Fluidizern, Füllern, Egalisiermitteln und Sinter-Hilfsmitteln.

6.  Festfreiformfertigungsmaterial-Satz, umfassend:

    das Festfreiformfertigungs-Pulvermaterial nach einem der Ansprüche 1 bis 5; und
    ein Festfreiformfertigungs-Flüssigmaterial, einschließend Wasser.

7.  Festfreiformfertigungsmaterial-Satz nach Anspruch 6, wobei das Festfreiformfertigungs-Flüssigmaterial ferner ein
    Vernetzungsmittel einschließt.

8.  Verfahren zum Herstellen eines Festfreiformfertigungsobjekts, umfassend:

    Bilden einer Schicht von Pulvermaterial aus dem Festfreiformfertigungs-Pulvermaterial nach einem der Ansprüche 1 bis 5; und
    Aufbringen eines Festfreiformfertigungs-Flüssigmaterials, einschließend Wasser, auf einen vorbestimmten Bereich der Pulvermaterialschicht.

9.  Verfahren nach Anspruch 8, wobei das Festfreiformfertigungs-Flüssigmaterial ferner ein Vernetzungsmittel einschließt.

10. Verfahren nach Anspruch 8 oder 9, wobei das Festfreiformfertigungs-Flüssigmaterial mit Hilfe eines Tintenspritzverfahrens aufgebracht wird.

11. Verfahren zum Herstellen eines gesinterten Presskörpers, umfassend:

    Herstellen eines Festfreiformfertigungsobjekts gemäß dem Verfahren nach einem der Ansprüche 8 bis 10; und

Sintern des Festfreiformfertigungsobjekts, um den gesinterten Presskörper herzustellen.

12. Vorrichtung zum Herstellen eines Festfreiformfertigungsobjekts, umfassend:

das Festfreiformfertigungs-Pulvermaterial nach einem der Ansprüche 1 bis 5;
eine Vorrichtung zum Bilden einer Pulvermaterialschicht, die konfiguriert ist, um eine Pulvermaterialschicht des Festfreiformfertigungs-Pulvermaterials zu bilden; und
eine Vorrichtung zum Aufbringen von Flüssigmaterial, die konfiguriert ist, ein Festfreiformfertigungs-Flüssigkeitsmaterial auf einen vorbestimmten Bereich der Pulvermaterialschicht aufzubringen, wobei die Vorrichtung zum Aufbringen von Flüssigmaterial ein Tintenspritzverfahren einsetzt.

**Revendications**

1. Matériau en poudre de fabrication de forme libre solide constitué de:

une particule de métal,
une particule de matériau organique soluble dans l'eau, et
des composants optionnels,
dans lequel la particule de matériau organique soluble dans l'eau constitue 2-18 pour-cent en volume du matériau en poudre de fabrication de forme libre solide constitué de la particule de métal et de la particule de matériau organique soluble dans l'eau et de tous composants optionnels, et
dans lequel la particule de matériau organique soluble dans l'eau a un diamètre de particule moyen en volume de 3-15 $\mu$m et le rapport de diamètre de particule moyen en volume de la particule de métal sur la particule de matériau organique soluble dans l'eau est de 0,5-3,5.

2. Matériau en poudre de fabrication de forme libre solide selon la revendication 1, dans lequel la valeur moyenne de rapport de forme calculée selon la relation 1 qui suit de la particule de métal est de 0,85 ou plus:

$$\text{valeur moyenne de rapport de forme} = (X1 \times Y1 + X2 \times Y2 + \bullet\bullet\bullet + Xn \times Yn) / 100, \\ \text{Relation 1}$$

où Xi représente un rapport de forme (axe mineur/axe majeur) de la particule de métal et Yi représente un pourcentage existant de la particule de métal ayant un rapport de forme de Xi, où i représente un nombre entier de 1 à n et Y1 + Y2 + $\bullet\bullet\bullet$ + Yn = 100.

3. Matériau en poudre de fabrication de forme libre solide selon la revendication 1 ou 2, dans lequel la particule de matériau organique soluble dans l'eau inclut une résine d'alcool de polyvinyle.

4. Matériau en poudre de fabrication de forme libre solide selon la revendication 3, dans lequel la résine d'alcool de polyvinyle inclut un groupe fonctionnel réticulable.

5. Matériau en poudre de fabrication de forme libre solide selon l'une quelconque des revendications précédentes, dans lequel les composants optionnels sont constitués d'un ou de plusieurs de ce qui suit: fluidiseurs, charges, agents égalisants et agents d'aide au frittage.

6. Ensemble de matériau de fabrication de forme libre solide comprenant:

le matériau en poudre de fabrication de forme libre solide selon l'une quelconque des revendications 1 à 5; et
un matériau liquide de fabrication de forme libre solide incluant de l'eau.

7. Ensemble de matériau de fabrication de forme libre solide selon la revendication 6, dans lequel le matériau liquide de fabrication de forme libre solide inclut en outre un agent de réticulation.

8. Procédé de fabrication d'un objet de fabrication de forme libre solide comprenant:

la formation d'une couche de matériau en poudre du matériau de poudre de fabrication de forme libre solide selon l'une quelconque des revendications 1 à 5; et
l'application d'un matériau liquide de fabrication de forme libre solide incluant de l'eau sur une zone prédéterminée de la couche de matériau en poudre.

9.  Procédé selon la revendication 8, dans lequel le matériau liquide de fabrication de forme libre solide inclut en outre un agent de réticulation.

10. Procédé selon la revendication 8 ou 9, dans lequel le matériau liquide de fabrication de forme libre solide est appliqué par méthode à jet d'encre.

11. Procédé de fabrication d'un élément compact fritté comprenant:

la fabrication d'un objet de fabrication de forme libre solide selon le procédé de l'une quelconque des revendications 8 à 10; et
le frittage de l'objet de fabrication de forme libre solide pour fabriquer l'élément compact fritté.

12. Dispositif de fabrication d'un objet de fabrication de forme libre solide comprenant:

le matériau en poudre de fabrication de forme libre solide selon l'une quelconque des revendications 1 à 5;
un dispositif de formation de couche de matériau en poudre configuré pour former une couche de matériau en poudre du matériau en poudre de fabrication de forme libre solide; et
un dispositif d'application de matériau liquide configuré pour appliquer un matériau liquide de fabrication de forme libre solide sur une zone prédéterminée de la couche de matériau en poudre, le dispositif d'application de matériau liquide employant une méthode à jet d'encre.

# FIG. 1

$S_2$

$A$

$S_1$

FIG. 2A

FIG. 2B

FIG. 2C

FIG. 2D

FIG. 2E

FIG. 2F

FIG. 3A

FIG. 3B

FIG. 3C

FIG. 3D

FIG. 3E

FIG. 3F

# FIG. 4

# FIG. 5A

# FIG. 5B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008038532 A
- WO 2015046629 A
- JP 2011230422 A
- JP 2012125996 A
- JP 2000328106 A
- JP 3607300 B